# EUROPEAN PATENT APPLICATION

(11) **EP 4 592 174 A1**
(43) Date of publication of application: **30.07.2025**
(21) Application number: 23882302.5
(22) Date of filing: 25.09.2023
(51) Int. Cl.: B63J 4/00, B01D 53/14

(54) **AMMONIA DETOXIFICATION SYSTEM, FLOATING BODY, AND AMMONIA DETOXIFICATION METHOD**

(30) Priority: 28.10.2022 JP 2022173295
(71) Applicant: Mitsubishi Heavy Industries, Ltd., Tokyo 100-8332 (JP)
(72) Inventor: TAKAMATSU, Tomoteru, Yokohama-shi, Kanagawa 220-8401 (JP); YAMADA, Daisuke, Yokohama-shi, Kanagawa 220-8401 (JP); YOSHIDA, Atsushi, Yokohama-shi, Kanagawa 220-8401 (JP)
(74) Representative: Studio Torta S.p.A.
(86) International application number: PCT/JP2023/034702
(87) International publication number: WO 2024/090091

(57) **Abstract**

An ammonia abatement system includes a first tank that stores an absorption liquid capable of absorbing ammonia, a first introduction line that can introduce purge gas containing ammonia and inert gas into the first tank, a first absorption promoting unit that promotes absorption of ammonia to be performed by the absorption liquid in the first tank, a first liquid discharge line that can discharge liquid from a liquid phase in the first tank, a first gas discharge line that can discharge gas from a gas phase in the first tank, a second tank that is provided independently of the first tank, an upper connection line that connects the gas phase in an upper portion of the first tank and an upper portion of the second tank, and a pressure regulating valve that is provided in the connection line and can be opened and closed according to a pressure of the gas phase in the first tank.

## Description

### TECHNICAL FIELD

The present disclosure relates to an ammonia abatement system, a floating body, and an ammonia abatement method.

Priority is claimed on Japanese Patent Application No. 2022-173295, filed October 28, 2022, the content of which is incorporated herein by reference.

### BACKGROUND ART

In a case where ammonia is used as fuel for a main engine or the like in a floating body such as a marine vessel, it is assumed that ammonia and another fuel such as heavy oil are switched and used. In a case where such switching of fuel is performed or in a case where some trouble occurs in the main engine, a pipe of a fuel system needs to be purged with inert gas, such as nitrogen, to discharge ammonia in the pipe.

However, ammonia may affect the surrounding environment. For this reason, in a case where the above-described purging is performed, it is not preferable that the ammonia discharged from the pipe is released into surrounding water, on which the floating body floats, or the atmosphere around the floating body as it is.

Patent Document 1 discloses a abatement system for ammonia gas that performs abatement treatment on ammonia gas leaked from a freezer unit before the ammonia gas is released into the atmosphere. In this abatement system, gas containing ammonia is guided into a closed space such as a scrubber or a cooling tower and sufficiently brought into contact with water to cause an ammonia component to be adsorbed by water.

### Citation List

### Patent Document

Patent Document 1: Japanese Unexamined Patent Application, First Publication No. 2006-26555

### SUMMARY OF INVENTION

### Technical Problem

Incidentally, in a case where the purging is performed as described above, the inert gas such as nitrogen fed for purging is discharged from the pipe together with ammonia. In a case where the inert gas is, for example, nitrogen, the nitrogen is difficult to be absorbed in water. For this reason, in the abatement system as described in Patent Document 1, the inert gas discharged from the pipe is hardly absorbed in water that absorbs an ammonia component in a closed space such as a scrubber or a cooling tower, and is released to the outside as it is. Further, since the flow rate of the inert gas in such purging is high, there is a possibility that the absorption capacity for the ammonia component in the closed space is reduced by the inert gas flowing in a large amount.

In addition, there is also a possibility that a phenomenon such as so-called flooding in which water supplied into the closed space flows back upward occurs due to the inert gas flowing in a large amount.

The present disclosure has been made in order to solve the above-described problems, and an object of the present disclosure is to provide an ammonia abatement system, a floating body, and an ammonia abatement method that can ensure ammonia absorption capacity during purging.

### Solution to Problem

In order to solve the above-described problems, an ammonia abatement system according to an aspect of the present disclosure includes a first tank, a first introduction line, a first absorption promoting unit, a first liquid discharge line, a second gas discharge line, a second tank, an upper connection line, and a pressure regulating valve. The first tank stores an absorption liquid capable of absorbing ammonia. The first introduction line can introduce purge gas, which contains ammonia and inert gas, into the first tank. The first absorption promoting unit promotes the absorption of ammonia to be performed by the absorption liquid in the first tank. The first liquid discharge line can discharge liquid from a liquid phase in the first tank. The first gas discharge line can discharge gas from a gas phase in the first tank. The second tank is provided independently of the first tank. The upper connection line connects the gas phase in an upper portion in the first tank and an upper portion in the second tank. The pressure regulating valve is provided in the upper connection line. The pressure regulating valve can be opened and closed according to a pressure of the gas phase in the first tank.

An ammonia abatement system according to another aspect of the present disclosure includes a first tank, a first introduction line, a first absorption promoting unit, a first liquid discharge line, a second gas discharge line, a second tank, a lower connection line, and a liquid level regulating valve. The first tank stores an absorption liquid capable of absorbing ammonia. The first introduction line can introduce purge gas, which contains ammonia and inert gas, into the first tank. The first absorption promoting unit promotes the absorption of ammonia to be performed by the absorption liquid in the first tank. The first liquid discharge line can discharge liquid from a liquid phase in the first tank. The first gas discharge line can discharge gas from a gas phase in the first tank. The second tank is provided independently of the first tank. The lower connection line connects the liquid phase in a lower portion of the first tank and a lower portion of the second tank. The liquid level regulating valve is provided in the lower connection line. The liquid level regulating valve can be opened and closed according to a pressure of a gas phase in the first tank.

The floating body according to still another aspect of the present disclosure includes a floating main body and the above-described ammonia abatement system.

An ammonia abatement method according to yet another aspect of the present disclosure is an ammonia abatement method of the above-described ammonia abatement system, and includes a step of storing an absorption liquid, a step of introducing purge gas, a step of causing ammonia to be absorbed, and a step of transferring gas of a gas phase. In the step of storing the absorption liquid, the absorption liquid capable of absorbing ammonia is stored in a first tank. In the step of introducing the purge gas, the purge gas containing ammonia and inert gas is introduced into the first tank. In the step of causing ammonia to be absorbed, the ammonia contained in the purge gas introduced into the first tank is absorbed by the absorption liquid. In the step of transferring the gas of the gas phase, the gas phase in an upper portion in the first tank is transferred to the second tank in a case where a pressure of the gas phase in the first tank is equal to or higher than a preset reference pressure.

### Advantageous Effects of Invention

According to the ammonia abatement system, the floating body, and the ammonia abatement method of the aspects of the present disclosure, it is possible to ensure ammonia absorption capacity during purging.

### BRIEF DESCRIPTION OF DRAWINGS

[FIG. 1] A side view of a floating body provided with an ammonia abatement system according to an embodiment of the present disclosure.
[FIG. 2] A diagram showing the configuration of an ammonia abatement system according to a first embodiment of the present disclosure.
[FIG. 3] A flowchart of an ammonia abatement method according to the first embodiment of the present disclosure.
[FIG. 4] A diagram showing a step of storing an absorption liquid in the first embodiment of the present disclosure.
[FIG. 5] A diagram showing a step of introducing purge gas and a step of causing ammonia to be absorbed in the first embodiment of the present disclosure.
[FIG. 6] A diagram showing a step of transferring a gas phase in the first embodiment of the present disclosure.
[FIG. 7] A diagram showing a step of ending the introduction of the purge gas in the first embodiment of the present disclosure.
[FIG. 8] A diagram showing a step of discharging the gas phase in the first embodiment of the present disclosure.
[FIG. 9] A diagram showing a state following FIG. 8 in the step of discharging the gas phase in the first embodiment of the present disclosure.
[FIG. 10] A diagram showing a case where a liquid phase is discharged to a second wastewater tank in a step of discharging the liquid phase in the first embodiment of the present disclosure.
[FIG. 11] A diagram showing a case where the liquid phase is unloaded in the step of discharging the liquid phase in the first embodiment of the present disclosure.
[FIG. 12] A diagram showing a case where the liquid phase is treated by an ammonia component removal unit in the step of discharging the liquid phase in the first embodiment of the present disclosure.
[FIG. 13] A diagram showing the configuration of an ammonia abatement system according to a second embodiment of the present disclosure.
[FIG. 14] A flowchart of an ammonia abatement method according to the second embodiment of the present disclosure.
[FIG. 15] A diagram showing a step of storing an absorption liquid in the second embodiment of the present disclosure.
[FIG. 16] A diagram showing a step of introducing purge gas and a step of causing ammonia to be absorbed in the second embodiment of the present disclosure.
[FIG. 17] A diagram showing a step of transferring a gas phase in the second embodiment of the present disclosure.
[FIG. 18] A diagram showing a step of ending the introduction of the purge gas in the second embodiment of the present disclosure.
[FIG. 19] A diagram showing a step of discharging the gas phase in the second embodiment of the present disclosure.
[FIG. 20] A diagram showing a state following FIG. 19 in the step of discharging the gas phase in the second embodiment of the present disclosure.
[FIG. 21] A diagram showing a case where a liquid phase is discharged to a second wastewater tank in a step of discharging the liquid phase in the second embodiment of the present disclosure.
[FIG. 22] A diagram showing a case where the liquid phase is unloaded in the step of discharging the liquid phase in the second embodiment of the present disclosure.
[FIG. 23] A diagram showing a case where the liquid phase is treated by an ammonia component removal unit in the step of discharging the liquid phase in the first embodiment of the present disclosure.
[FIG. 24] A diagram showing the configuration of an ammonia abatement system according to a modification example of the first and second embodiments of the present disclosure.
[FIG. 25] A diagram showing the configuration of an ammonia abatement system according to another modification example of the first and second embodiments of the present disclosure.
   [FIG. 26] A diagram showing the configuration of an ammonia abatement system according to still another modification example of the first and second embodiments of the present disclosure.

### DESCRIPTION OF EMBODIMENTS

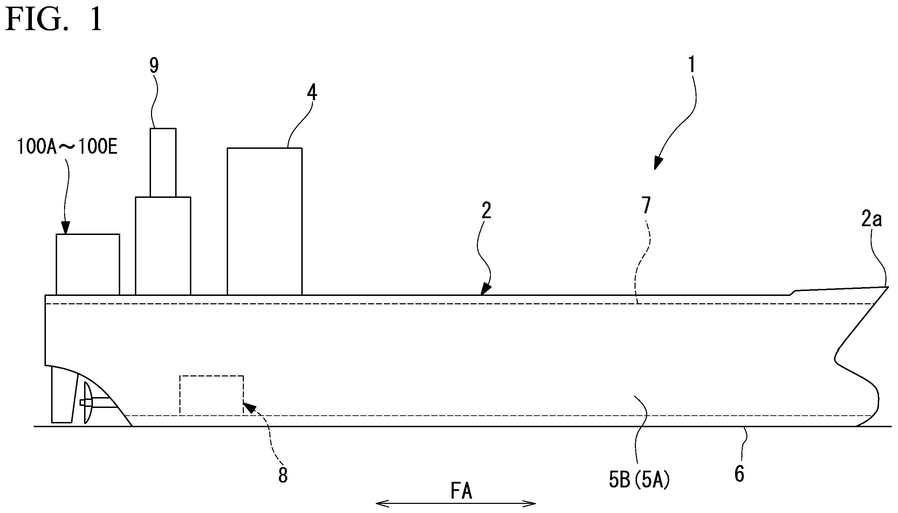

An ammonia abatement system, a floating body, and an ammonia abatement method according to embodiments of the present disclosure will be described below with reference to FIGS. 1 to 26.

### <First embodiment>

### (Overall configuration of floating body)

As shown in FIG. 1, a floating body 1 according to a first embodiment of the present disclosure includes a floating main body 2, a superstructure 4, a combustion device 8, and an ammonia abatement system 100A. The floating body 1 according to the first embodiment will be described as an example of a marine vessel that can navigate using a main engine or the like. The marine vessel type of the floating body 1 is not limited to a specific marine vessel type. A liquefied gas carrier, a ferry, a RORO ship, an automobile carrier, a passenger ship, and the like can be provided as an exemplary example as the marine vessel type of the floating body 1. A case where the floating body 1 is a marine vessel will be described in the first embodiment. However, the floating body 1 is not limited to a marine vessel and may be a floating storage unit (FSU), a floating storage and regasification unit (FSRU), or the like that cannot navigate using a main engine or the like.

The floating main body 2 is formed to float on seawater. The floating main body 2 includes a pair of broadsides 5A and 5B and a bottom 6 that form the outer hull thereof. The broadsides 5A and 5B include a pair of broadside outer plates that form left and right broadsides. The bottom 6 includes a bottom outer plate that connects these broadsides 5A and 5B. The outer hull of the floating main body 2 is formed to have a U shape in a cross section perpendicular to a bow and stern direction FA by the pair of broadsides 5A and 5B and the bottom 6.

The floating main body 2 further includes an upper deck 7 that is a full-length deck disposed in the uppermost layer. The superstructure 4 is formed on the upper deck 7. A residential area and the like are provided in the superstructure 4. In the floating body 1 according to the first embodiment, for example, a cargo space (not shown) in which cargo is to be loaded is provided on a side closer to a bow 2a than the superstructure 4 in the bow and stern direction FA.

The combustion device 8 is a device that burns fuel to generate thermal energy, and is provided in the floating main body 2. An internal combustion engine used for a main engine that propels the floating body 1, an internal combustion engine used for a power generation facility that supplies electricity to the marine vessel, a boiler that generates steam as working fluid, and the like can be provided as an exemplary example as the combustion device 8. Ammonia and other fuels, such as heavy oil different from ammonia, can be switched and used as fuels in the combustion device 8 used as the main engine in the floating body 1 according to the present embodiment. A fuel system (not shown) that supplies fuel is connected to the combustion device 8. Ammonia and another fuel flow in the fuel system.

In a case where the fuel of the combustion device 8 is switched from ammonia to another fuel or in a case where maintenance is performed, so-called purging in which ammonia remaining in a piping system including the fuel system of the combustion device 8 is replaced with inert gas (purge gas) such as nitrogen is performed. Here, the ammonia remaining in the piping system may be, for example, liquefied ammonia or ammonia gas. To perform purging, an inert gas supply device (not shown) is connected to the piping system. The inert gas supply device is configured to be capable of supplying the inert gas to the piping system. The inert gas may be gas that does not have a chemical reaction in a case where the inert gas is in contact with ammonia and, for example, nitrogen can be provided as an exemplary example as the inert gas. In a case where inert gas is supplied from an inert gas supply source (not shown) of the inert gas supply device to the piping system, ammonia in the piping system is pushed out by the inert gas. Accordingly, purge gas containing ammonia (liquefied ammonia or ammonia gas) and the inert gas is discharged from the piping system.

### (Configuration of ammonia abatement system)

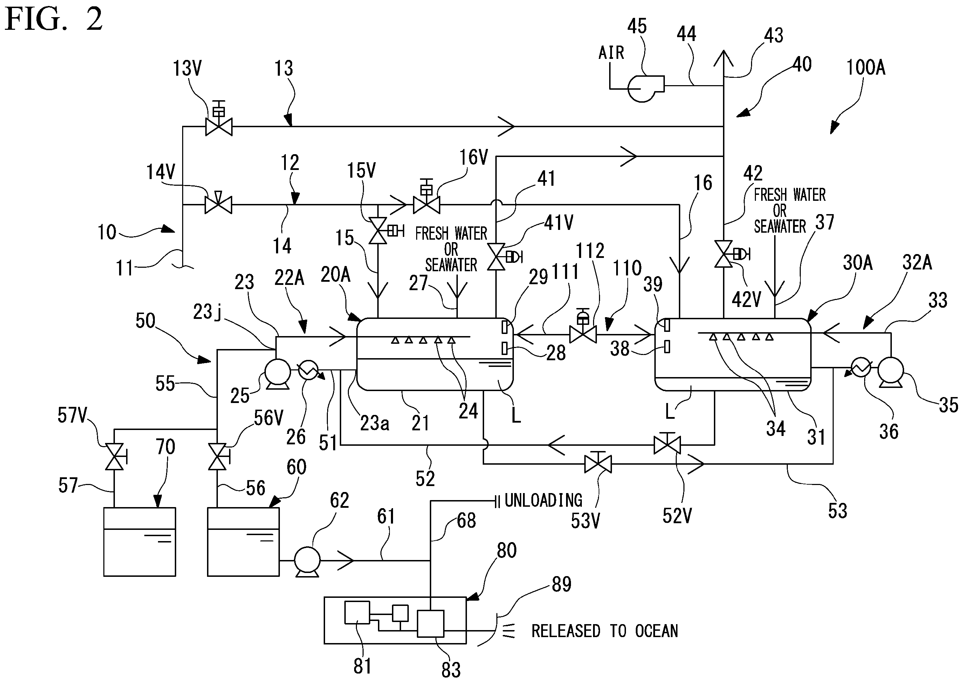

FIG. 2 is a diagram showing the configuration of an ammonia abatement system according to the first embodiment of the present disclosure.

As shown in FIG. 2, the ammonia abatement system 100A includes at least a purge gas introduction unit 10, a first tank 20A, a second tank 30A, an exhaust unit 40, a drainage unit 50, a first wastewater tank 60, a second wastewater tank 70, an ammonia component removal unit 80, and a pressure regulating unit 110. The ammonia abatement system 100A abates the ammonia contained in the purge gas, which is discharged from the piping system, in a case where the ammonia in the piping system is purged.

The purge gas introduction unit 10 guides the purge gas, which is discharged from the piping system of the combustion device 8 during the purging, to the ammonia abatement system 100A. The purge gas introduction unit 10 guides a gas component of the purge gas, which is separated into gas and liquid by a knockout drum (not shown), to the ammonia abatement system 100A. The concentrations of ammonia and the inert gas in the purge gas, which flows in the purge gas introduction unit 10, change in an initial stage, a middle stage, and a last stage of the purging. For example, in the initial stage of the purging, ammonia gas mainly flows in the purge gas introduction unit 10. In the middle stage of the purging, a gas mixture of the ammonia gas and the inert gas flows in the purge gas introduction unit 10. In the last stage of the purging, substantially only the inert gas flows in the purge gas introduction unit 10.

The purge gas introduction unit 10 includes a main introduction line 11, a tank introduction line 12, and a bypass line 13.

The main introduction line 11 is connected to the piping system of the combustion device 8. The purge gas, which is discharged from the piping system of the combustion device 8 during the purging, is introduced into the main introduction line 11.

The tank introduction line 12 and the bypass line 13 are provided to branch into two systems from the main introduction line 11.

The tank introduction line 12 feeds the purge gas into the first tank 20A and the second tank 30A. The tank introduction line 12 includes a main pipe 14, a first introduction line 15, and a second introduction line 16. The main pipe 14 is connected to the main introduction line 11. The main pipe 14 includes an on-off valve 14V. The on-off valve 14V is configured to be capable of opening and closing a flow passage in the main pipe 14.

The first introduction line 15 and the second introduction line 16 are provided to branch into two systems from the main pipe 14. A downstream end of the first introduction line 15 is connected to a top portion of the first tank 20A. A downstream end of the second introduction line 16 is connected to a top portion of the second tank 30A. An on-off valve 15V is provided in the middle of the first introduction line 15. The on-off valve 15V is configured to be capable of opening and closing a flow passage in the first introduction line 15. An on-off valve 16V is provided in the middle of the second introduction line 16. The on-off valve 16V is configured to be capable of opening and closing a flow passage in the second introduction line 16.

The bypass line 13 releases the purge gas, which is introduced from the main introduction line 11, into the atmosphere as it is without feeding the purge gas into the first tank 20A and the second tank 30A. The bypass line 13 bypasses the first tank 20A and the second tank 30A from the main introduction line 11 and is connected to an atmosphere release line 43 described later. An on-off valve 13V that is configured to be capable of opening and closing a flow passage in the bypass line 13 is provided in the middle of the bypass line 13.

The first tank 20A includes a tank body 21 and a first absorption promoting unit 22A.

The tank body 21 has a hollow structure, and stores an absorption liquid L, which can absorb ammonia, therein. A water intake pipe 27 for taking in fresh water or seawater from the outside as the absorption liquid L is connected to the tank body 21. Accordingly, liquid that forms a liquid phase containing the absorption liquid L is stored in a lower portion in the tank body 21. Gas that forms a gas phase is stored above the liquid phase in the tank body 21. The purge gas is introduced into the tank body 21 through the main introduction line 11, the main pipe 14, and the first introduction line 15. An ammonia component contained in the purge gas, which is introduced into the tank body 21, is absorbed by the absorption liquid L. Accordingly, the liquid of the liquid phase in the tank body 21 contains the absorption liquid L and the ammonia component.

A liquid level gauge 28 and a pressure gauge 29 are provided in the tank body 21 of the first tank 20A. The liquid level gauge 28 determines the liquid level of the liquid phase in the tank body 21. The pressure gauge 29 determines the pressure of the gas phase in the tank body 21. The liquid level gauge 28 and the pressure gauge 29 output the determination data thereof to a control device (not shown) to be described later.

The first absorption promoting unit 22A promotes the absorption of ammonia to be performed by the absorption liquid L in the first tank 20A. The first absorption promoting unit 22A of the present embodiment includes a first circulation line 23, sprays 24, a circulation pump 25, and a heat exchanger 26. One end portion of the first circulation line 23 communicates with a lower portion in the first tank 20A. The other end portion of the first circulation line 23 is disposed in the gas phase present in an upper portion in the first tank 20A. The sprays 24 are provided at the other end portion of the first circulation line 23 in the first tank 20A. The circulation pump 25 and the heat exchanger 26 are provided in the middle of the first circulation line 23. The circulation pump 25 sucks the liquid phase present in the first tank 20A into the first circulation line 23 and circulates the liquid phase to the gas phase present in the upper portion of the first tank 20A. The heat exchanger 26 cools the liquid phase sucked into the first circulation line 23 and removes reaction heat that is generated in a case where ammonia is dissolved in the absorption liquid L. The liquid phase sucked into the first circulation line 23 is sprayed into the gas phase present in the upper portion of the first tank 20A through the sprays 24. Accordingly, the absorption liquid L contained in the liquid phase comes into contact with the ammonia present in the gas phase in the first tank 20A and the absorption of the ammonia is promoted.

The second tank 30A is provided independently of the first tank 20A. The second tank 30A includes a tank body 31 and a second absorption promoting unit 32A.

The tank body 31 has a hollow structure, and stores an absorption liquid L, which can absorb ammonia, therein. For this reason, a water intake pipe 37 for taking in fresh water or seawater from the outside as the absorption liquid L is connected to the tank body 31. Accordingly, a liquid phase containing the absorption liquid L is stored in a lower portion in the tank body 31. A gas phase is stored above the liquid phase in the tank body 31. The purge gas is introduced into the tank body 31 through the main introduction line 11, the main pipe 14, and the second introduction line 16. An ammonia component contained in the purge gas, which is introduced into the tank body 31, is absorbed by the absorption liquid L. Accordingly, the liquid phase in the tank body 31 contains the absorption liquid L and the ammonia component.

The second absorption promoting unit 32A promotes the absorption of ammonia to be performed by the absorption liquid L in the second tank 30A. The second absorption promoting unit 32A of the present embodiment includes a second circulation line 33, sprays 34, a circulation pump 35, and a heat exchanger 36. One end portion of the second circulation line 33 communicates with a lower portion in the second tank 30A. The other end portion of the second circulation line 33 is disposed in the gas phase present in an upper portion in the second tank 30A. The sprays 34 are provided at the other end portion of the second circulation line 33 in the second tank 30A. The circulation pump 35 and the heat exchanger 36 are provided in the middle of the second circulation line 33. The circulation pump 35 sucks the liquid phase present in the second tank 30A into the second circulation line 33 and circulates the liquid phase to the gas phase present in the upper portion of the second tank 30A. The heat exchanger 36 cools the liquid phase sucked into the second circulation line 33 and removes reaction heat that is generated in a case where ammonia is dissolved in the absorption liquid L. The liquid phase sucked into the second circulation line 33 is sprayed into the gas phase present in the upper portion of the second tank 30A through the sprays 34. Accordingly, the absorption liquid L contained in the liquid phase comes into contact with the ammonia present in the gas phase in the second tank 30A and the absorption of the ammonia is promoted.

A liquid level gauge 38 and a pressure gauge 39 are provided in the tank body 31 of the second tank 30A. The liquid level gauge 38 determines the liquid level of the liquid phase in the tank body 31. The pressure gauge 39 determines the pressure of the gas phase in the tank body 31. The liquid level gauge 38 and the pressure gauge 39 output the determination data thereof to the control device (not shown) to be described later.

The exhaust unit 40 includes a first gas discharge line 41, a second gas discharge line 42, and an atmosphere release line 43.

The first gas discharge line 41 can discharge gas from the gas phase in the first tank 20A. One end of the first gas discharge line 41 communicates with the upper portion of the tank body 21 of the first tank 20A. The other end of the first gas discharge line 41 is connected to the atmosphere release line 43. A flow regulating valve 41V is provided in the middle of the first gas discharge line 41. The flow regulating valve 41V can regulate the flow rate of the gas phase in the first tank 20A, which is discharged through the first gas discharge line 41.

The second gas discharge line 42 can discharge gas from the gas phase in the second tank 30A. One end of the second gas discharge line 42 communicates with the upper portion of the tank body 31 of the second tank 30A. The other end of the second gas discharge line 42 is connected to the atmosphere release line 43. A flow regulating valve 42V is provided in the middle of the second gas discharge line 42. The flow regulating valve 42V can regulate the flow rate of the gas phase in the second tank 30A, which is discharged through the second gas discharge line 42.

The atmosphere release line 43 releases the gas of the gas phase, which is discharged from the first gas discharge line 41 and the second gas discharge line 42, and the purge gas, which is discharged through the bypass line 13, into the atmosphere. For example, a vent post, a funnel 9 (see FIG. 1), or the like provided on the upper deck 7 of the floating main body 2 can be used as the atmosphere release line 43.

A dilution line 44 is connected to the atmosphere release line 43. The dilution line 44 can introduce diluent gas, which reduces the ammonia concentration of the gas phase discharged through the atmosphere release line 43, into the atmosphere release line 43. Outside air (air) taken in from the outside through the dilution line 44 can be provided as an exemplary example as the diluent gas. The dilution line 44 is provided with a dilution fan 45 that can regulate the flow rate of the diluent gas fed into the atmosphere release line 43.

The drainage unit 50 includes a first liquid discharge line 51, a second liquid discharge line 52, a drain line 55, and a third liquid discharge line 53.

The first liquid discharge line 51 can discharge liquid from the liquid phase in the first tank 20A. The first liquid discharge line 51 is shared with a part of the first circulation line 23. Specifically, the first liquid discharge line 51 shares a portion between a portion 23a of the first circulation line 23 that is connected to the lower portion of the tank body 21 and a portion 23j to which one end of the drain line 55 is connected on the downstream side of the circulation pump 25, with the first circulation line 23.

The second liquid discharge line 52 can discharge liquid from the liquid phase in the second tank 30A. The second liquid discharge line 52 is provided to connect the lower portion of the tank body 31 of the second tank 30A and a portion of the first liquid discharge line 51 positioned on the upstream side of the circulation pump 25 and the heat exchanger 26. An on-off valve 52V is provided in the middle of the second liquid discharge line 52. The on-off valve 52V is configured to be capable of opening and closing a flow passage in the second liquid discharge line 52.

The third liquid discharge line 53 is provided to connect the lower portion of the tank body 21 of the first tank 20A and a portion of the second circulation line 33 positioned on the upstream side of the circulation pump 35 and the heat exchanger 36. An on-off valve 53V is provided in the middle of the third liquid discharge line 53. The on-off valve 53V is configured to be capable of opening and closing a flow passage in the third liquid discharge line 53.

The drain line 55 is connected to the first liquid discharge line 51 at the portion 23j. The other end of the drain line 55 is connected to branch pipes 56 and 57. The branch pipe 56 is connected to the first wastewater tank 60. The branch pipe 57 is connected to the second wastewater tank 70. An on-off valve 56V is provided in the middle of the branch pipe 56. The on-off valve 56V is configured to be capable of opening and closing a flow passage in the branch pipe 56. An on-off valve 57V is provided in the middle of the branch pipe 57. The on-off valve 57V is configured to be capable of opening and closing a flow passage in the branch pipe 57.

The first wastewater tank 60 and the second wastewater tank 70 are configured to be capable of storing liquid discharged from the first tank 20A and the second tank 30A through the drainage unit 50.

The first wastewater tank 60 is connected to the ammonia component removal unit 80 via a drain line 61. A pump 62 is provided in the middle of the drain line 61. In a case where the pump 62 is operated, the liquid temporarily stored in the first wastewater tank 60 is transferred to the ammonia component removal unit 80 through the drain line 61.

The ammonia component removal unit 80 removes an ammonia component contained in the absorption liquid L. In a case where seawater or fresh water is introduced into the first tank 20A and the second tank 30A as the absorption liquid L, the absorption liquid L having absorbed ammonia is transferred from the first tank 20A and the second tank 30A to the ammonia component removal unit 80 via the first wastewater tank 60.

The ammonia component removal unit 80 removes the ammonia component contained in the absorption liquid L by, for example, a denitrification reaction using sodium hypochlorite. The ammonia component removal unit 80 includes, for example, an electrolysis unit 81 and a denitrification unit 83. The electrolysis unit 81 performs electrolysis on seawater taken in from the outside of the marine vessel to generate a seawater electrolyte containing sodium hypochlorite. Specifically, the electrolysis unit 81 applies a voltage between a positive electrode and a negative electrode (not shown), which are disposed in the introduced seawater, to electrolyze the seawater. This electrolysis generates sodium hypochlorite from seawater.

The denitrification unit 83 causes a liquid mixture of the absorption liquid L that has absorbed ammonia and the seawater electrolyte that is generated in the electrolysis unit 81 to react. The denitrification unit 83 mixes the seawater electrolyte, which is generated by the electrolysis, with the absorption liquid L, which is introduced from the first tank 20A and the second tank 30A, and causes the seawater electrolyte and the absorption liquid L to react to each other. More specifically, as shown in Formula (1), the denitrification unit 83 causes ammonia (2NH₃), which is contained in the absorption liquid L having absorbed ammonia, and sodium hypochlorite (3NaClO) of the seawater electrolyte to react to each other in an acidic environment to decompose the ammonia and sodium hypochlorite into nitrogen (N₂), sodium chloride (3NaCl), and water (3H₂O).

2NH₃+3NaClO→N₂+3NaCl+3H₂O ... (1)

Nitrogen generated by the denitrification reaction in the denitrification unit 83 is released into the atmosphere through, for example, the funnel 9 extending from the upper deck 7. On the other hand, sodium chloride and water generated by the denitrification reaction are discharged into surrounding seawater, on which the floating main body 2 floats, as treated water from a discharge unit 89 connected to the ammonia component removal unit 80.

Further, an unloading line 68 is provided to branch from the drain line 61. The unloading line 68 is connected to the drain line 61 between the pump 62 and the ammonia component removal unit 80. The unloading line 68 is configured to unload the liquid phase stored in the first wastewater tank 60. The liquid phase that has been unloaded at a port or the like through the unloading line 68 is disposed of at a land facility without being regenerated in the floating main body 2.

The second wastewater tank 70 temporarily stores liquid that is discharged from the first tank 20A and the second tank 30A through the drainage unit 50. In the first embodiment, the liquid stored in the second wastewater tank 70 may be used as ammonia liquid for denitrification used in a denitrification device (not shown). The denitrification device performs denitrification treatment on exhaust gas discharged from the combustion device 8. The denitrification device is provided in the middle of an exhaust pipe (not shown) through which exhaust gas is discharged from the combustion device 8. The denitrification device is a selective catalytic reduction-denitrification device (SCR), and converts nitrogen oxides, which are contained in the exhaust gas, into nitrogen and water using a catalyst. In this case, it is preferable that the ammonia concentration of the ammonia liquid for denitrification is regulated to a predetermined ammonia concentration (for example, about 25%) required for the ammonia liquid to be used as a reducing agent for the denitrification device. The liquid discharged from the first tank 20A and the second tank 30A through the drainage unit 50 absorbs ammonia, so that the ammonia concentration of the liquid is increased. Such liquid of which the ammonia concentration is increased can be suitably used as the ammonia liquid for denitrification.

### (Configuration of pressure regulating unit)

The pressure regulating unit 110 includes an upper connection line 111 and a pressure regulating valve 112.

The upper connection line 111 connects the gas phase, which is present in the upper portion of the first tank 20A, and the upper portion of the second tank 30A.

The pressure regulating valve 112 is provided in the middle of the upper connection line 111. The pressure regulating valve 112 is configured to be capable of opening and closing a flow passage in the upper connection line 111 according to the pressure of the gas phase in the first tank 20A. The pressure regulating valve 112 is opened and closed according to the pressure of the gas phase in the first tank 20A that is determined by the pressure gauge 29. The operation of the pressure regulating valve 112 is automatically controlled by the control device (not shown).

The pressure regulating valve 112 is controlled to be opened in a case where the pressure of the gas phase in the first tank 20A is equal to or higher than a preset reference pressure in a state where the pressure of the gas phase in the first tank 20A is higher than the pressure of the gas phase in the second tank 30A. In a case where the pressure regulating valve 112 is opened in a state where the pressure of the gas phase in the first tank 20A is higher than the pressure of the gas phase in the second tank 30A, the gas phase in the first tank 20A communicates with the upper portion of the second tank 30A. Accordingly, the pressure of the gas phase in the first tank 20A is reduced.

### (Ammonia abatement method)

Next, an ammonia abatement method for the floating body according to the first embodiment of the present disclosure will be described with reference to the drawings.

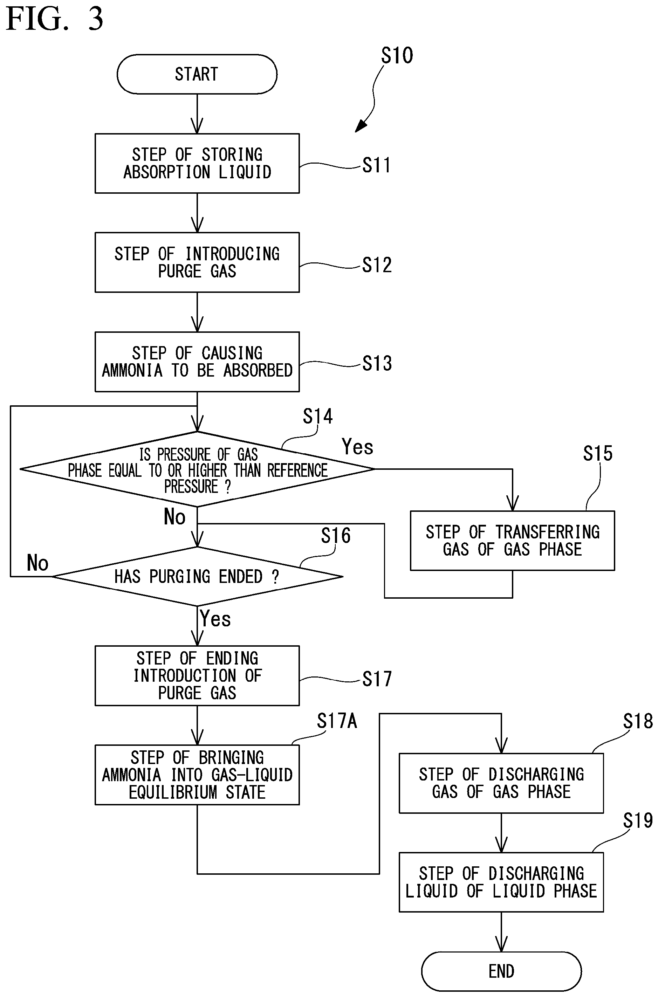

FIG. 3 is a flowchart of the ammonia abatement method according to the first embodiment of the present disclosure.

As shown in FIG. 3, the ammonia abatement method S10 according to the first embodiment includes Step S11 of storing an absorption liquid L, Step S12 of introducing purge gas, Step S13 of causing ammonia to be absorbed, Step S14 of checking the pressure of a gas phase, Step S15 of transferring gas of the gas phase, Step S16 of checking the end of purging, Step S17 of ending the introduction of the purge gas, Step S17A of bringing ammonia into a gas-liquid equilibrium state, Step S18 of discharging the gas of the gas phase, and Step S19 of discharging liquid of a liquid phase.

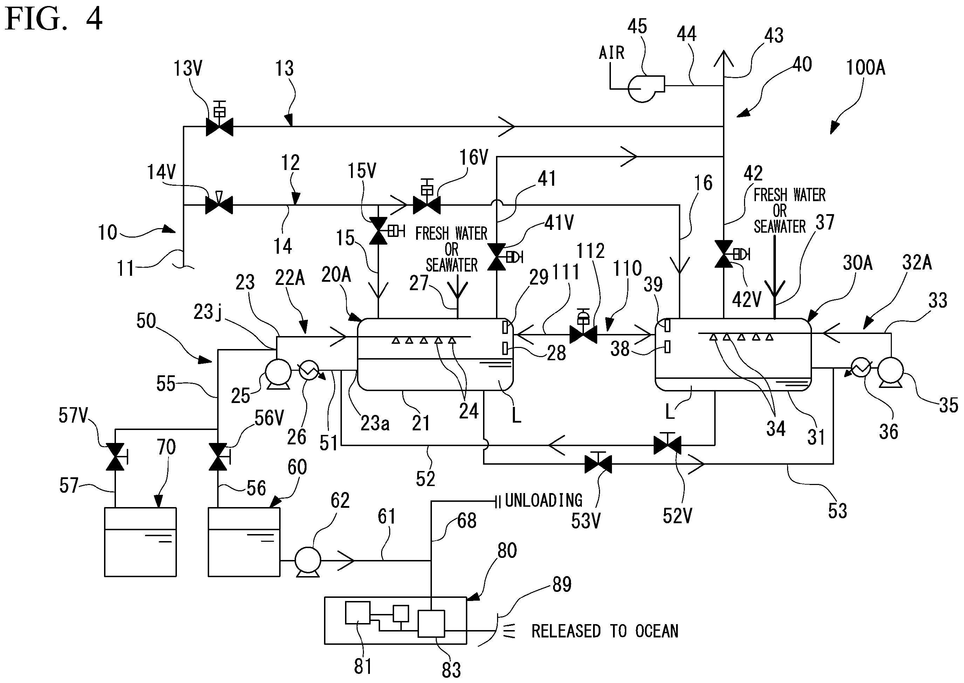

FIG. 4 is a diagram showing a step of storing an absorption liquid in the first embodiment of the present disclosure.

In Step S11 of storing the absorption liquid L, the absorption liquid L is stored in the first tank 20A as shown in FIG. 4 before inert gas is fed into the piping system including the fuel system of the combustion device 8 to perform purging. Fresh water or seawater is taken in from the outside of the first tank 20A through the water intake pipe 27 as the absorption liquid L. The absorption liquid L is stored until the liquid level determined by the liquid level gauge 28 reaches a preset liquid level. Further, the absorption liquid L may also be stored in the second tank 30A in Step S11.

Furthermore, all of the on-off valves 13V, 14V, and 15V, the pressure regulating valve 112, the flow regulating valves 41V and 42V, and the on-off valves 52V, 53V, 56V, and 57V are closed.

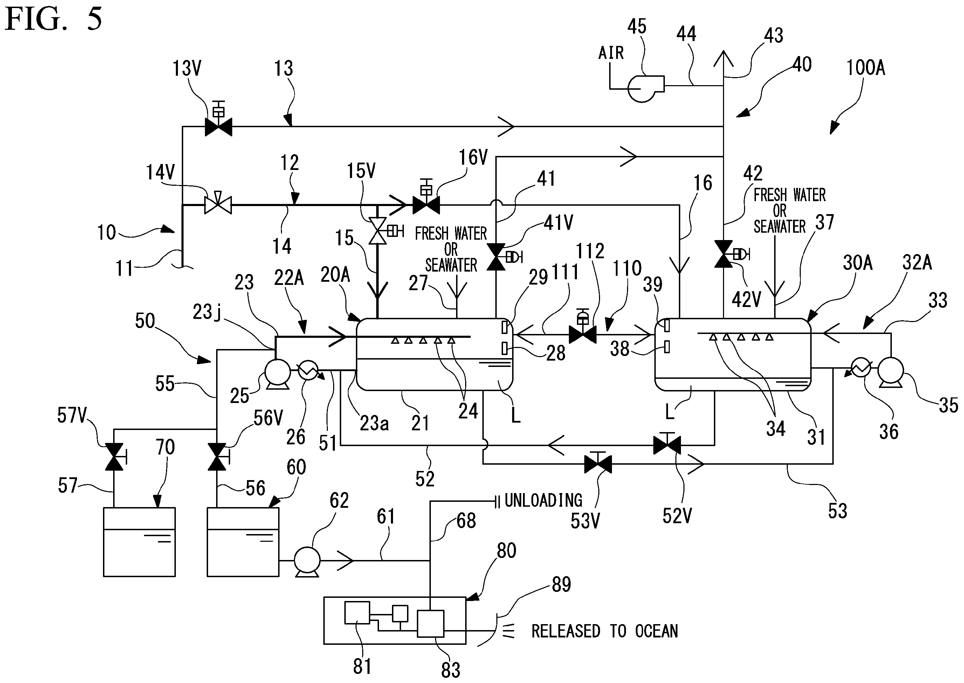

FIG. 5 is a diagram showing a step of introducing purge gas and a step of causing ammonia to be absorbed in the first embodiment of the present disclosure.

In Step S12 of introducing the purge gas, the purge gas containing ammonia and the inert gas is introduced into the first tank 20A in a case where the inert gas is fed into the piping system to perform purging. In this case, only the on-off valves 14V and 15V of the tank introduction line 12 are opened as shown in FIG. 5. Then, the purge gas is introduced into the first tank 20A from the main introduction line 11 through the main pipe 14 and the first introduction line 15 of the tank introduction line 12.

In Step S13 of causing ammonia to be absorbed, an ammonia component contained in the purge gas introduced into the first tank 20A is caused to be absorbed by the absorption liquid L. In this case, in the first absorption promoting unit 22A, the circulation pump 25 is operated to suck the liquid of the liquid phase, which is present in the first tank 20A, into the first circulation line 23 and to spray the liquid from the sprays 24 into the gas phase present in the upper portion of the first tank 20A. Accordingly, the absorption liquid L contained in the liquid of the liquid phase comes into contact with the ammonia present in the gas phase in the first tank 20A and the absorption of the ammonia is promoted. Step S13 may be performed in parallel with Step S12 of introducing the purge gas.

Incidentally, in a case where the purging of the piping system is to be performed, a large amount of inert gas is fed. For this reason, the purge gas is sequentially fed into the first tank 20A. The ammonia contained in the purge gas fed into the first tank 20A is absorbed by the absorption liquid L. Accordingly, the concentration of the inert gas, which is difficult to be absorbed by the absorption liquid L, is increased in the gas phase in the first tank 20A. In this case, the inside of the first tank 20A is formed as a closed space, and the pressure of the gas phase is sequentially increased.

In Step S14 of checking the pressure of the gas phase, the pressure of the gas phase in the first tank 20A is determined by the pressure gauge 29 at every preset time interval during the continuation of Step S12 and Step S13. Data of the pressure of the gas phase determined by the pressure gauge 29 is output to the control device (not shown).

In a case where the control device acquires the data of the pressure of the gas phase determined by the pressure gauge 29, the control device determines whether or not the determined pressure is equal to or higher than a preset reference pressure.

As a result, in a case where the determined pressure of the gas phase in the first tank 20A is lower than the reference pressure ("No" in Step S14), Steps S12 and S13 are continued as they are.

On the other hand, in a case where the determined pressure of the gas phase in the first tank 20A is equal to or higher than the reference pressure ("Yes" in Step S14), the process proceeds to Step S15.

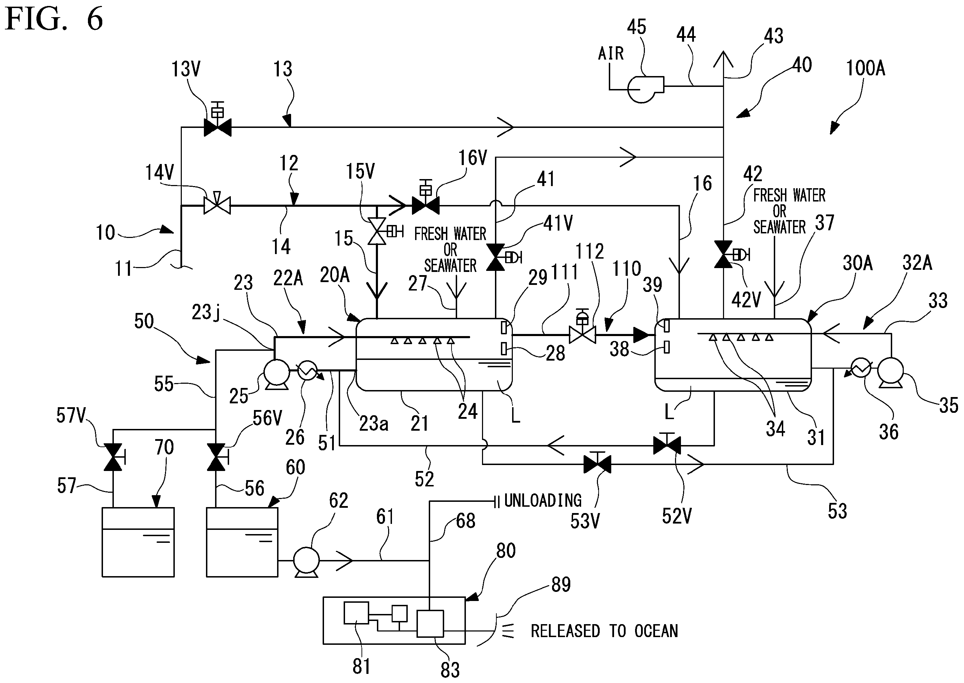

FIG. 6 is a diagram showing a step of transferring the gas phase in the first embodiment of the present disclosure.

In Step S15 of transferring the gas phase, the pressure regulating valve 112 is opened under the control of the control device as shown in FIG. 6. Step S15 is performed in a state where the pressure of the gas phase in the first tank 20A determined by the pressure gauge 29 is higher than the pressure of the gas phase in the second tank 30A determined by the pressure gauge 39. Then, the gas of the gas phase in the first tank 20A is transferred into the second tank 30A through the upper connection line 111. Accordingly, the pressure of the gas phase in the first tank 20A is reduced. As a result, the total amount of the purge gas, which is sequentially fed, can be received by the first tank 20A.

As Step S13 is continued in parallel with Step S15, the ammonia contained in the purge gas fed into the first tank 20A is absorbed by the absorption liquid L. Accordingly, the concentration of the inert gas is increased in the gas phase in the first tank 20A. Further, in a case where the absorption liquid L is stored in the second tank 30A in Step S15, the ammonia contained in the gas transferred from the first tank 20A into the second tank 30A is absorbed by the absorption liquid L. On the other hand, in a case where the absorption liquid L is not stored in the second tank 30A in Step S15, the pressure of the gas phase in the second tank 30A can be reduced to about atmospheric pressure. Accordingly, the second tank 30A can receive a larger amount of gas from the first tank 20A.

In Step S16 of checking the end of the purging, the control device checks whether or not the supply of the inert gas for the purging of the piping system has ended.

As a result, in a case where it cannot be checked that the supply of the inert gas has not ended and the purging has ended ("No" in Step S16), the process returns to Step S14.

On the other hand, in a case where it can be checked that the supply of the inert gas has ended and the purging has ended ("Yes" in Step S16), the process proceeds to Step S17.

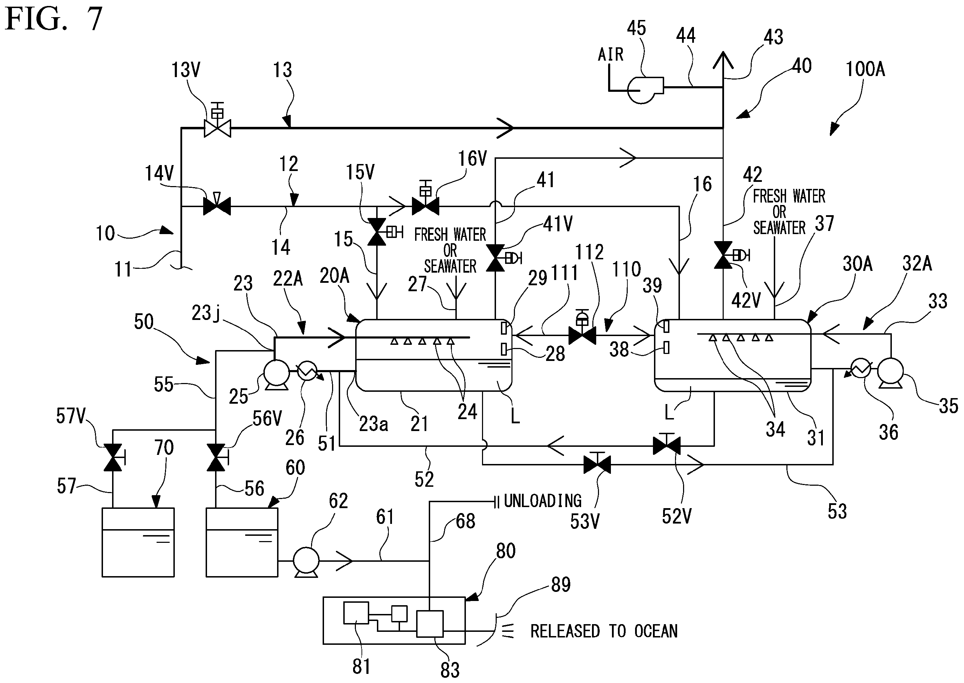

FIG. 7 is a diagram showing a step of ending the introduction of the purge gas in the first embodiment of the present disclosure.

In Step S17 of ending the introduction of the purge gas, the on-off valves 14V and 15V are closed and the on-off valve 13V of the bypass line 13 is opened as shown in FIG. 7 after it is checked that the supply of the inert gas to the piping system ends. In the last stage of the purging of the piping system, the purge gas is substantially inert gas and has a low ammonia content. Therefore, the on-off valve 13V is opened and the purge gas is released into the atmosphere from the atmosphere release line 43 via the bypass line 13. Accordingly, pressure in the piping system is reduced. After the pressure in the piping system is sufficiently reduced, the on-off valve 13V is closed.

Further, in Step S17, the pressure regulating valve 112 is closed in a case where the pressure regulating valve 112 is open. Furthermore, in the first absorption promoting unit 22A, the liquid of the liquid phase in the first tank 20A continues to be circulated to the sprays 24 and continues to be sprayed into the gas phase present in the upper portion of the first tank 20A.

In Step S17A of bringing the ammonia into a gas-liquid equilibrium state, the ammonia is brought into a gas-liquid equilibrium state between the gas phase and the liquid phase in the first tank 20A. In a case where the liquid continues to be sprayed into the gas phase present in the upper portion of the first tank 20A, the absorption liquid L contained in the liquid phase in the first tank 20A comes into contact with the ammonia present in the gas phase in the first tank 20A. Accordingly, the ammonia concentration of the gas phase is gradually reduced. The gas phase and the absorption liquid (liquid phase) in the first tank 20A tend to be brought into a gas-liquid equilibrium state. That is, as the ammonia solubility of the absorption liquid is increased, the ammonia concentration of the gas phase is also gradually increased. On the other hand, in a case where the ammonia concentration of the gas phase is reduced, the ammonia of the liquid phase is emitted due to a difference in partial pressure and is sequentially supplied to the gas phase. As a result, the ammonia solubility of the liquid phase is reduced. In a case where the ammonia concentration is equilibrated between the gas phase and the liquid phase in the first tank 20A and the ammonia is brought into a gas-liquid equilibrium state in the first tank 20A, the process proceeds to Step S18. For example, the pressure and temperature in the first tank 20A or the ammonia concentration in the first tank 20A may be directly measured to determine the gas-liquid equilibrium state of the ammonia.

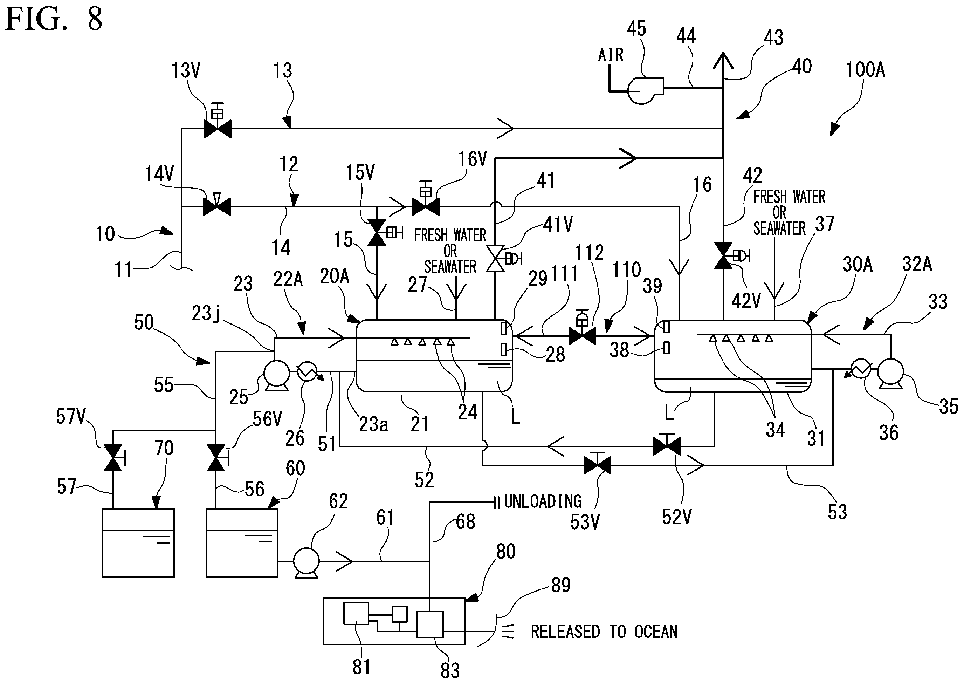

FIG. 8 is a diagram showing a step of discharging the gas phase in the first embodiment of the present disclosure.

In Step S18 of discharging the gas phase, as shown in FIG. 8, the circulation pump 25 is stopped, and the circulation of the absorption liquid L (liquid phase) in the first tank 20A and the spray of the liquid from the sprays 24 are stopped. Further, the flow regulating valve 41V is opened, and the gas of the gas phase in the first tank 20A is released into the atmosphere through the first gas discharge line 41 and the atmosphere release line 43. At this time, in a case where the ammonia concentration of the gas released through the atmosphere release line 43 is high, the flow rate of the purge gas discharged from the first tank 20A to the first gas discharge line 41 is reduced by the flow regulating valve 41V. Accordingly, the ammonia concentration of the gas released through the atmosphere release line 43 is suppressed. Furthermore, in a case where the dilution fan 45 is operated to increase the flow rate of the diluent gas to be fed into the atmosphere release line 43, the ammonia concentration of the gas phase released through the atmosphere release line 43 can be further suppressed. After the gas of the gas phase in the first tank 20A is discharged, the flow regulating valve 41V is closed.

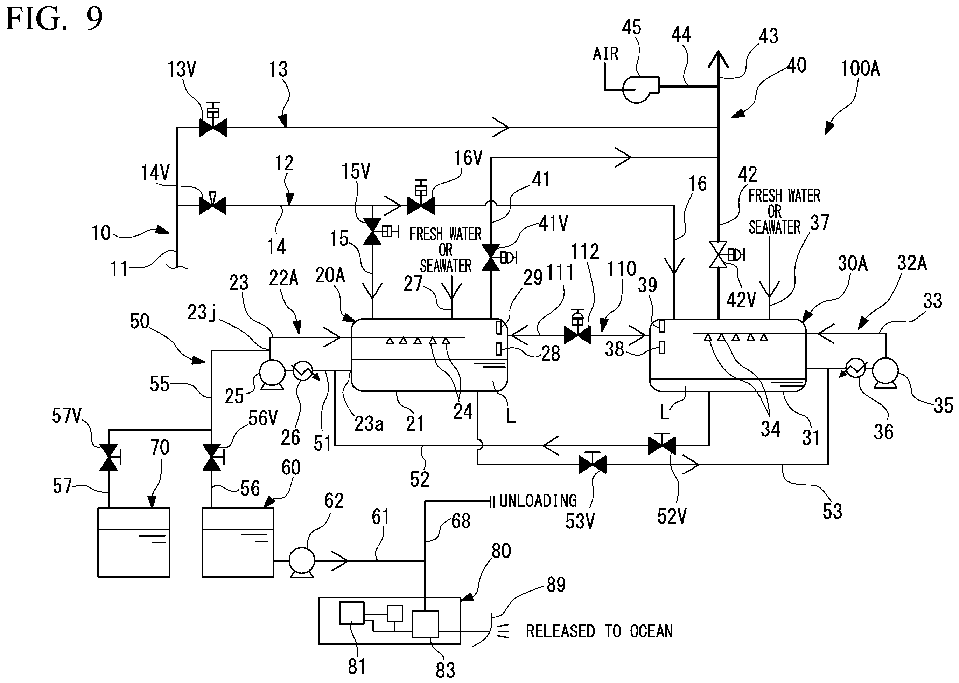

FIG. 9 is a diagram showing a state following FIG. 8 in the step of discharging the gas of the gas phase in the first embodiment of the present disclosure.

Further, in Step S18 of discharging the gas of the gas phase, as shown in FIG. 9, the flow regulating valve 42V is opened and the gas of the gas phase in the second tank 30A is released into the atmosphere through the second gas discharge line 42 and the atmosphere release line 43. At this time, in a case where the ammonia concentration of the gas phase released through the atmosphere release line 43 is high, the flow rate of the purge gas discharged from the second tank 30A to the second gas discharge line 42 is reduced by the flow regulating valve 42V. Accordingly, the ammonia concentration of the gas released through the atmosphere release line 43 is suppressed. Furthermore, in a case where the dilution fan 45 is operated to increase the flow rate of the diluent gas to be fed into the atmosphere release line 43, the ammonia concentration of the gas released through the atmosphere release line 43 can be further suppressed. After the gas of the gas phase in the second tank 30A is discharged, the flow regulating valve 42V is closed.

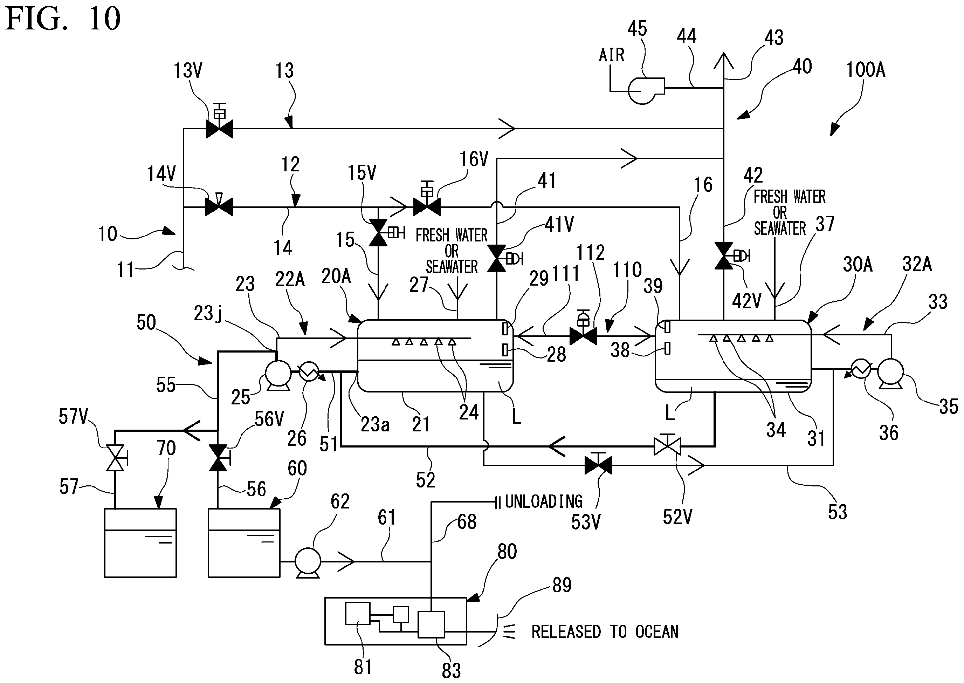

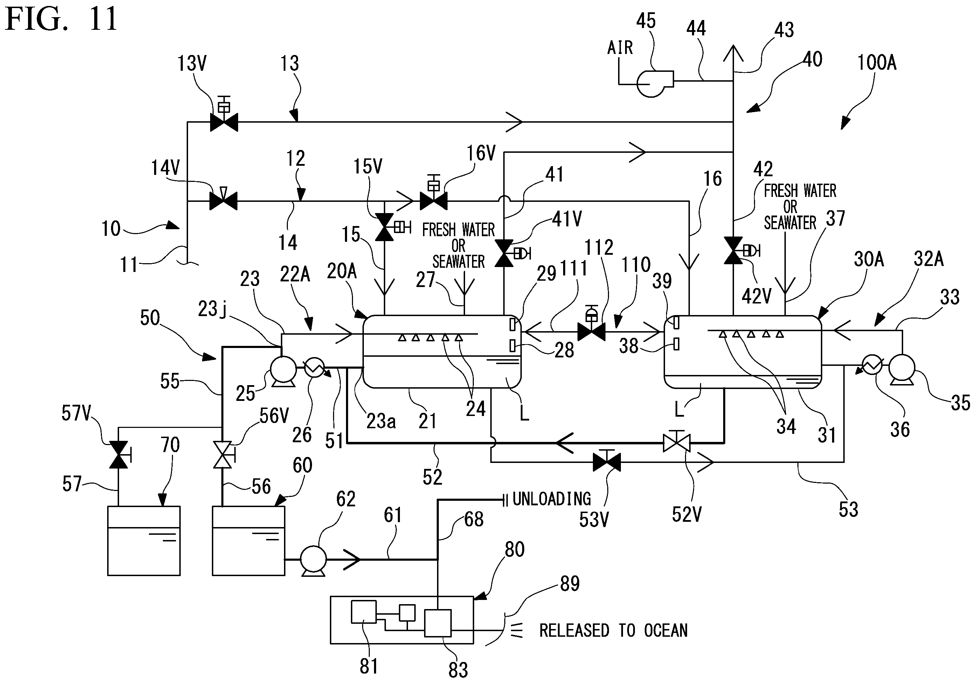

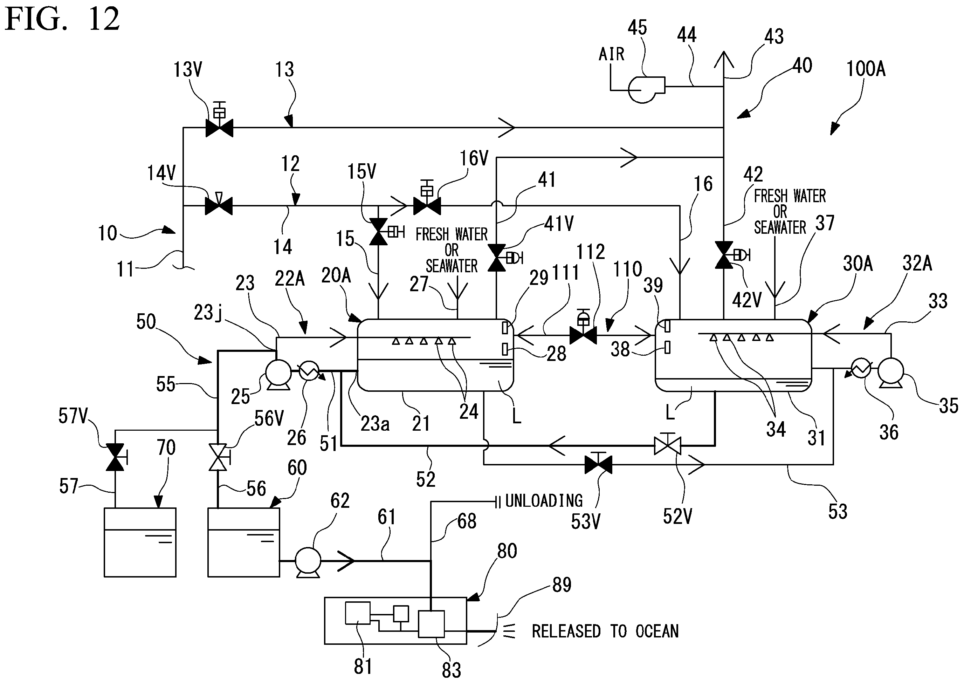

FIG. 10 is a diagram showing a case where the liquid of the liquid phase is discharged to the second wastewater tank in a step of discharging the liquid of the liquid phase in the first embodiment of the present disclosure. FIG. 11 is a diagram showing a case where the liquid of the liquid phase is unloaded in the step of discharging liquid of the liquid phase in the first embodiment of the present disclosure. FIG. 12 is a diagram showing a case where the liquid of the liquid phase is treated by the ammonia component removal unit in the step of discharging the liquid of the liquid phase in the first embodiment of the present disclosure.

In Step S19 of discharging the liquid of the liquid phase, the liquid phase is discharged by the drainage unit 50 in a case where the ammonia concentration of the liquid of the liquid phase remaining in the first tank 20A exceeds a preset reference concentration. Step S19 may be performed before Step S18 of discharging the liquid of the gas phase, or may be performed in parallel with Step S18.

In Step S19, the circulation pump 25 is operated. Accordingly, as shown in FIGS. 10 to 12, the liquid of the liquid phase in the first tank 20A is drained through the first liquid discharge line 51 and the drain line 55. Further, in a case where liquid of a liquid phase remains in the second tank 30A, the on-off valve 52V is opened, so that the liquid of the liquid phase in the second tank 30A is drained through the second liquid discharge line 52, the first liquid discharge line 51, and the drain line 55.

At this time, in a case where fresh water is introduced into the first tank 20A and the second tank 30A, the on-off valve 56V is closed and the on-off valve 57V is opened as shown in FIG. 10. Accordingly, the liquid of the liquid phase remaining in the first tank 20A and the second tank 30A is drained to the second wastewater tank 70 and can be used as a reducing agent for the denitrification device.

Further, in a case where seawater or fresh water is introduced into the first tank 20A and the second tank 30A, any further treatment is not performed in the floating body 1 and the on-off valve 56V is opened and the on-off valve 57V is closed as shown in FIG. 11, so that the liquid of the liquid phase may be stored in the first wastewater tank 60 and may be unloaded from the unloading line 68.

Furthermore, in a case where seawater or fresh water is introduced into the first tank 20A and the second tank 30A, the on-off valve 56V is opened and the on-off valve 57V is closed. Accordingly, as shown in FIG. 12, the liquid of the liquid phase containing seawater, which remains in the first tank 20A and the second tank 30A, is sent to the ammonia component removal unit 80 via the first wastewater tank 60. The liquid of the liquid phase is released to the ocean (discharged to the outside of the marine vessel) from the discharge unit 89 after being subjected to treatment for removing an ammonia component by the ammonia component removal unit 80.

After Step S19 of discharging the liquid of the liquid phase is performed before Step S18 of discharging the gas of the gas phase is performed, the absorption liquid L may be stored in the first tank 20A and the second tank 30A again as in Step S11. Accordingly, it is possible to increase the ammonia absorption efficiency of the gas of the gas phase that remains in the first tank 20A and the second tank 30A.

### (Effects)

In the ammonia abatement system 100A, the floating body 1, and the ammonia abatement method S10 according to the above-described embodiment, the first tank 20A and the second tank 30A provided independently of the first tank 20A are connected to each other by the upper connection line 111. In a case where the pressure regulating valve 112 provided in the upper connection line 111 is opened according to the pressure of the gas phase in the first tank 20A, the gas of the gas phase present in the upper portion of the first tank 20A is transferred to the upper portion of the second tank 30A. Accordingly, the pressure of the gas phase in the first tank 20A is reduced. Therefore, the purge gas flowing in thereafter can be further received by the first tank 20A. As a result, the purge gas that flows in a large amount during the purging can be received by the first tank 20A, so that a larger amount of ammonia can be caused to be absorbed.

Further, in the first tank 20A, the ammonia contained in the purge gas is absorbed by the absorption liquid L, so that the ammonia concentration of the gas phase is reduced. Then, the gas of the gas phase is discharged. As described above, in the first tank 20A, so-called continuous treatment of continuously discharging the gas in which ammonia is absorbed while absorbing ammonia contained in the introduced purge gas is not performed, but batch treatment is performed. For this reason, it is not necessary to provide an absorption tower or the like on the downstream side of the first tank 20A, and it is possible to efficiently treat purge gas while sufficiently absorbing ammonia. Therefore, the occurrence of a phenomenon such as flooding in which water supplied into a closed space of an absorption tower or the like flows back upward due to the flow of the inert gas is also suppressed.

In addition, in the above-described embodiment, the pressure regulating valve 112 is opened to feed the gas of the gas phase in the first tank 20A into the upper portion of the second tank 30A in a case where the pressure of the gas phase in the first tank 20A is equal to or higher than the preset reference pressure. Therefore, an excessive increase in the pressure of the gas phase in the first tank 20A to a pressure equal to or higher than the reference pressure is suppressed by the inert gas that is sequentially introduced into the first tank 20A. Accordingly, a reduction in the ammonia absorption capacity of the absorption liquid L in the first tank 20A is suppressed.

Further, the second tank 30A includes the second introduction line 16 and the second absorption promoting unit 32A in the above-described embodiment.

Accordingly, even in the second tank 30A, the ammonia contained in the purge bus can be absorbed as in the first tank 20A. Therefore, in a case where the absorption of ammonia cannot be performed in the first tank 20A for some reason, the absorption of ammonia can be performed in the second tank 30A instead of the first tank 20A. Therefore, the redundancy of the ammonia abatement system 100A can be increased.

Furthermore, the ammonia abatement system 100A includes the flow regulating valve 41V in the above-described embodiment.

Accordingly, in a case where the ammonia concentration of the gas of the gas phase in the first tank 20A, which is discharged through the first gas discharge line 41, is high, the flow rate of the gas phase can be reduced by the flow regulating valve 41V. Therefore, the ammonia concentration of the gas discharged from the first gas discharge line 41 can be reduced.

In addition, in the above-described embodiment, the absorption of the ammonia, which is contained in the purge gas, to be performed by the absorption liquid L in the first tank 20A can be promoted by the first absorption promoting unit 22A including the sprays 24.

Further, in the above-described embodiment, the liquid of the liquid phase in the first tank 20A is circulated to the first absorption promoting unit 22A through the first circulation line 23, so that the absorption of ammonia to be performed by the absorption liquid L can be efficiently performed while the absorption liquid L is effectively utilized.

Furthermore, in the above-described embodiment, the liquid phase sucked into the first circulation line 23 is cooled by the heat exchanger 26, so that the reaction heat generated in a case where ammonia is dissolved in the absorption liquid L can be removed.

### <Second embodiment>

Next, an ammonia abatement system and an ammonia abatement method according to a second embodiment of the present disclosure will be described. Since the second embodiment to be described below is different from the first embodiment in terms of only a configuration in which the ammonia abatement system includes a liquid level regulating unit 120 instead of the pressure regulating unit 110, the same parts as those of the first embodiment are denoted by the same reference numerals and repeated description thereof will be omitted.

### (Configuration of ammonia abatement system)

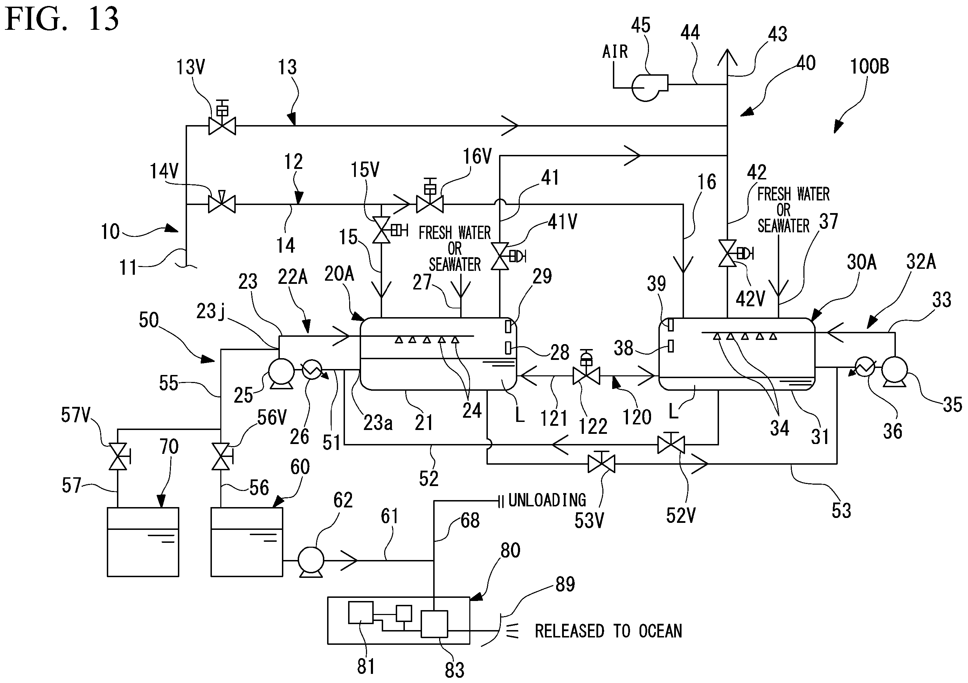

FIG. 13 is a diagram showing a configuration of the ammonia abatement system according to the second embodiment of the present disclosure.

As shown in FIG. 13, the ammonia abatement system 100B mainly includes a purge gas introduction unit 10, a first tank 20A, a second tank 30A, an exhaust unit 40, a drainage unit 50, a first wastewater tank 60, a second wastewater tank 70, an ammonia component removal unit 80, and a liquid level regulating unit 120. The ammonia abatement system 100B abates ammonia contained in purge gas, which is discharged from a piping system, in a case where the ammonia in the piping system is purged.

The purge gas introduction unit 10 guides the purge gas, which is discharged from the piping system of a combustion device 8 during purging, to the ammonia abatement system 100B. The purge gas introduction unit 10 guides a gas component of the purge gas, which is separated into gas and liquid by a knockout drum (not shown), to the ammonia abatement system 100B. The concentrations of ammonia and the inert gas in the purge gas, which flows in the purge gas introduction unit 10, change in an initial stage, a middle stage, and a last stage of the purging. For example, in the initial stage of the purging, ammonia gas mainly flows in the purge gas introduction unit 10. In the middle stage of the purging, a gas mixture of the ammonia gas and the inert gas flows in the purge gas introduction unit 10. In the last stage of the purging, substantially only the inert gas flows in the purge gas introduction unit 10.

The purge gas introduction unit 10 includes a main introduction line 11, a tank introduction line 12, and a bypass line 13.

The main introduction line 11 is connected to the piping system of the combustion device 8. The purge gas, which is discharged from the piping system of the combustion device 8 during the purging, is introduced into the main introduction line 11.

The tank introduction line 12 and the bypass line 13 are provided to branch into two systems from the main introduction line 11.

The tank introduction line 12 feeds the purge gas into the first tank 20A and the second tank 30A. The tank introduction line 12 includes a main pipe 14, a first introduction line 15, and a second introduction line 16. The main pipe 14 is connected to the main introduction line 11. The main pipe 14 includes an on-off valve 14V. The on-off valve 14V is configured to be capable of opening and closing a flow passage in the main pipe 14.

The first introduction line 15 and the second introduction line 16 are provided to branch into two systems from the main pipe 14. A downstream end of the first introduction line 15 is connected to a top portion of the first tank 20A. A downstream end of the second introduction line 16 is connected to a top portion of the second tank 30A. An on-off valve 15V is provided in the middle of the first introduction line 15. The on-off valve 15V is configured to be capable of opening and closing a flow passage in the first introduction line 15. An on-off valve 16V is provided in the middle of the second introduction line 16. The on-off valve 16V is configured to be capable of opening and closing a flow passage in the second introduction line 16.

The bypass line 13 releases the purge gas, which is introduced from the main introduction line 11, into the atmosphere as it is without feeding the purge gas into the first tank 20A and the second tank 30A. The bypass line 13 bypasses the first tank 20A and the second tank 30A from the main introduction line 11 and is connected to an atmosphere release line 43 described later. An on-off valve 13V that is configured to be capable of opening and closing a flow passage in the bypass line 13 is provided in the middle of the bypass line 13.

The first tank 20A includes a tank body 21 and a first absorption promoting unit 22A.

The tank body 21 has a hollow structure, and stores an absorption liquid L, which can absorb ammonia, therein. For this reason, a water intake pipe 27 for taking in fresh water or seawater from the outside as the absorption liquid L is connected to the tank body 21. Accordingly, a liquid phase containing the absorption liquid L is stored in a lower portion of the tank body 21. A gas phase is stored above the liquid phase in the tank body 21. The purge gas is introduced into the tank body 21 through the main introduction line 11, the main pipe 14, and the first introduction line 15. An ammonia component contained in the purge gas, which is introduced into the tank body 21, is absorbed by the absorption liquid L. Accordingly, the liquid phase in the tank body 21 contains the absorption liquid L and the ammonia component.

A liquid level gauge 28 and a pressure gauge 29 are provided in the tank body 21 of the first tank 20A. The liquid level gauge 28 determines the liquid level of the liquid phase in the tank body 21. The pressure gauge 29 determines the pressure of the gas phase in the tank body 21. The liquid level gauge 28 and the pressure gauge 29 output the determination data thereof to a control device (not shown) to be described later.

The first absorption promoting unit 22A promotes the absorption of ammonia to be performed by the absorption liquid L in the first tank 20A. The first absorption promoting unit 22A of the present embodiment includes a first circulation line 23, sprays 24, a circulation pump 25, and a heat exchanger 26. One end portion of the first circulation line 23 communicates with a lower portion of the first tank 20A. The other end portion of the first circulation line 23 is disposed in the gas phase present in an upper portion of the first tank 20A. The sprays 24 are provided at the other end portion of the first circulation line 23 in the first tank 20A. The circulation pump 25 and the heat exchanger 26 are provided in the middle of the first circulation line 23. The circulation pump 25 sucks the liquid of the liquid phase present in the first tank 20A into the first circulation line 23 and circulates the liquid to the gas phase present in the upper portion of the first tank 20A. The heat exchanger 26 cools the liquid phase sucked into the first circulation line 23 and removes reaction heat that is generated in a case where ammonia is dissolved in the absorption liquid L. The liquid of the liquid phase sucked into the first circulation line 23 is sprayed into the gas phase present in the upper portion of the first tank 20A through the sprays 24. Accordingly, the absorption liquid L contained in the liquid comes into contact with the ammonia present in the gas phase in the first tank 20A and the absorption of the ammonia is promoted.

The second tank 30A is provided independently of the first tank 20A. The second tank 30A includes a tank body 31 and a second absorption promoting unit 32A.

The tank body 31 has a hollow structure, and stores an absorption liquid L, which can absorb ammonia, therein. For this reason, a water intake pipe 37 for taking in fresh water or seawater from the outside as the absorption liquid L is connected to the tank body 31. Accordingly, liquid that forms the liquid phase containing the absorption liquid L is stored in a lower portion of the tank body 31. Gas that forms the gas phase is stored above the liquid phase in the tank body 31. The purge gas is introduced into the tank body 31 through the main introduction line 11, the main pipe 14, and the second introduction line 16. An ammonia component contained in the purge gas, which is introduced into the tank body 31, is absorbed by the absorption liquid L. Accordingly, the liquid phase in the tank body 31 contains the absorption liquid L and the ammonia component.

The second absorption promoting unit 32A promotes the absorption of ammonia to be performed by the absorption liquid L in the second tank 30A. The second absorption promoting unit 32A of the present embodiment includes a second circulation line 33, sprays 34, a circulation pump 35, and a heat exchanger 36. One end portion of the second circulation line 33 communicates with a lower portion of the second tank 30A. The other end portion of the second circulation line 33 is disposed in the gas phase present in an upper portion of the second tank 30A. The sprays 34 are provided at the other end portion of the second circulation line 33 in the second tank 30A. The circulation pump 35 and the heat exchanger 36 are provided in the middle of the second circulation line 33. The circulation pump 35 sucks the liquid of the liquid phase present in the second tank 30A into the second circulation line 33 and circulates the liquid to the gas phase present in the upper portion of the second tank 30A. The heat exchanger 36 cools the liquid sucked into the second circulation line 33 and removes reaction heat that is generated in a case where ammonia is dissolved in the absorption liquid L. The liquid phase sucked into the second circulation line 33 is sprayed into the gas phase present in the upper portion of the second tank 30A through the sprays 34. Accordingly, the absorption liquid L contained in the liquid comes into contact with the ammonia present in the gas phase in the second tank 30A and the absorption of the ammonia is promoted.

A liquid level gauge 38 and a pressure gauge 39 are provided in the tank body 31 of the second tank 30A. The liquid level gauge 38 determines the liquid level of the liquid phase in the tank body 31. The pressure gauge 39 determines the pressure of the gas phase in the tank body 31. The liquid level gauge 38 and the pressure gauge 39 output the determination data thereof to the control device (not shown) to be described later.

The exhaust unit 40 includes a first gas discharge line 41, a second gas discharge line 42, and an atmosphere release line 43.

The first gas discharge line 41 can discharge gas from the gas phase in the first tank 20A. One end of the first gas discharge line 41 communicates with the upper portion of the tank body 21 of the first tank 20A. The other end of the first gas discharge line 41 is connected to the atmosphere release line 43. A flow regulating valve 41V is provided in the middle of the first gas discharge line 41. The flow regulating valve 41V can regulate the flow rate of the gas phase in the first tank 20A, which is discharged through the first gas discharge line 41.

The second gas discharge line 42 can discharge gas from the gas phase in the second tank 30A. One end of the second gas discharge line 42 communicates with the upper portion of the tank body 31 of the second tank 30A. The other end of the second gas discharge line 42 is connected to the atmosphere release line 43. A flow regulating valve 42V is provided in the middle of the second gas discharge line 42. The flow regulating valve 42V can regulate the flow rate of the gas in the second tank 30A, which is discharged through the second gas discharge line 42.

The atmosphere release line 43 releases the gas of the gas phase, which is discharged from the first gas discharge line 41 and the second gas discharge line 42, and the purge gas, which is discharged through the bypass line 13, into the atmosphere. For example, a vent post, a funnel 9 (see FIG. 1), or the like provided on the upper deck 7 of the floating main body 2 can be used as the atmosphere release line 43.

A dilution line 44 is connected to the atmosphere release line 43. The dilution line 44 can introduce diluent gas, which reduces the ammonia concentration of the gas discharged through the atmosphere release line 43, into the atmosphere release line 43. Outside air (air) taken in from the outside through the dilution line 44 can be provided as an exemplary example as the diluent gas. The dilution line 44 is provided with a dilution fan 45 that can regulate the flow rate of the diluent gas fed into the atmosphere release line 43.

The drainage unit 50 includes a first liquid discharge line 51, a second liquid discharge line 52, a drain line 55, and a third liquid discharge line 53.

The first liquid discharge line 51 can discharge liquid from the liquid phase in the first tank 20A. The first liquid discharge line 51 is shared with a part of the first circulation line 23. Specifically, the first liquid discharge line 51 shares a portion between a portion 23a of the first circulation line 23 that is connected to the lower portion of the tank body 21 and a portion 23j to which one end of the drain line 55 is connected on the downstream side of the circulation pump 25, with the first circulation line 23.

The second liquid discharge line 52 can discharge liquid from the liquid phase in the second tank 30A. The second liquid discharge line 52 is provided to connect the lower portion of the tank body 31 of the second tank 30A and a portion of the first liquid discharge line 51 positioned on the upstream side of the circulation pump 25 and the heat exchanger 26. An on-off valve 52V is provided in the middle of the second liquid discharge line 52. The on-off valve 52V is configured to be capable of opening and closing a flow passage in the second liquid discharge line 52.

The third liquid discharge line 53 is provided to connect the lower portion of the tank body 21 of the first tank 20A and a portion of the second circulation line 33 positioned on the upstream side of the circulation pump 35 and the heat exchanger 36. An on-off valve 53V is provided in the middle of the third liquid discharge line 53. The on-off valve 53V is configured to be capable of opening and closing a flow passage in the third liquid discharge line 53.

The drain line 55 is connected to the first liquid discharge line 51 at the portion 23j. The other end of the drain line 55 is connected to branch pipes 56 and 57. The branch pipe 56 is connected to the first wastewater tank 60. The branch pipe 57 is connected to the second wastewater tank 70. An on-off valve 56V is provided in the middle of the branch pipe 56. The on-off valve 56V is configured to be capable of opening and closing a flow passage in the branch pipe 56. An on-off valve 57V is provided in the middle of the branch pipe 57. The on-off valve 57V is configured to be capable of opening and closing a flow passage in the branch pipe 57.

The first wastewater tank 60 and the second wastewater tank 70 are configured to be capable of storing liquid discharged from the first tank 20A and the second tank 30A through the drainage unit 50.

The first wastewater tank 60 is connected to the ammonia component removal unit 80 via a drain line 61. A pump 62 is provided in the middle of the drain line 61. In a case where the pump 62 is operated, the liquid temporarily stored in the first wastewater tank 60 is transferred to the ammonia component removal unit 80 through the drain line 61.

The ammonia component removal unit 80 is used in a case where seawater is introduced into the first tank 20A and the second tank 30A as the absorption liquid L. In a case where seawater is introduced into the first tank 20A and the second tank 30A as the absorption liquid L, the absorption liquid L (seawater) having absorbed ammonia is transferred from the first tank 20A and the second tank 30A to the ammonia component removal unit 80 via the first wastewater tank 60. The ammonia component removal unit 80 removes the ammonia component contained in the absorption liquid L using sodium hypochlorite that is obtained in a case where electrolysis is performed on the transferred seawater.

The ammonia component removal unit 80 includes an electrolysis unit 81 and a denitrification unit 83. The electrolysis unit 81 performs electrolysis on the seawater to generate a seawater electrolyte containing sodium hypochlorite. Specifically, the electrolysis unit 81 applies a voltage between a positive electrode and a negative electrode (not shown), which are disposed in the introduced seawater, to electrolyze the seawater. This electrolysis generates sodium hypochlorite from seawater.

The denitrification unit 83 causes a liquid mixture of the absorption liquid L that has absorbed ammonia and the seawater electrolyte that is generated in the electrolysis unit 81 to react. The denitrification unit 83 mixes the seawater electrolyte, which is generated by the electrolysis, with the absorption liquid L, which is introduced from the first tank 20A and the second tank 30A, and causes the seawater electrolyte and the absorption liquid L to react to each other. More specifically, as shown in Formula (1), the denitrification unit 83 causes ammonia (2NH₃), which is contained in the absorption liquid L having absorbed ammonia, and sodium hypochlorite (3NaClO) of the seawater electrolyte to react to each other in an acidic environment to decompose the ammonia and sodium hypochlorite into nitrogen (N₂), sodium chloride (3NaCl), and water (3H₂O).

2NH₃+3NaClO→N₂+3NaCl+3H₂O ... (1)

Nitrogen generated by the denitrification reaction in the denitrification unit 83 is released into the atmosphere through, for example, the funnel 9 extending from the upper deck 7. On the other hand, sodium chloride and water generated by the denitrification reaction are discharged into surrounding seawater, on which the floating main body 2 floats, as treated water from a discharge unit 89 connected to the ammonia component removal unit 80.

Further, an unloading line 68 is provided to branch from the drain line 61. The unloading line 68 is connected to the drain line 61 between the pump 62 and the ammonia component removal unit 80. The unloading line 68 is configured to unload the liquid phase stored in the first wastewater tank 60. The liquid phase that has been unloaded at a port or the like through the unloading line 68 is disposed of at a land facility without being regenerated in the floating main body 2.

The second wastewater tank 70 temporarily stores liquid that is discharged from the first tank 20A and the second tank 30A through the drainage unit 50. In the present embodiment, the liquid stored in the second wastewater tank 70 may be used as an ammonia liquid for denitrification used in a denitrification device (not shown). The denitrification device performs denitrification treatment on exhaust gas discharged from the combustion device 8. The denitrification device is provided in the middle of an exhaust pipe (not shown) through which exhaust gas is discharged from the combustion device 8. The denitrification device is a selective catalytic reduction-denitrification device (SCR), and converts nitrogen oxides, which are contained in the exhaust gas, into nitrogen and water using a catalyst. In this case, it is preferable that the ammonia concentration of the ammonia liquid for denitrification is regulated to a predetermined ammonia concentration (for example, about 25%) required for the ammonia liquid to be used as a reducing agent for the denitrification device. The liquid of the liquid phase discharged from the first tank 20A and the second tank 30A through the drainage unit 50 absorbs ammonia, so that the ammonia concentration of the liquid is increased. Such liquid of which the ammonia concentration is increased can be suitably used as the ammonia liquid for denitrification.

### (Configuration of liquid level regulating unit)

The liquid level regulating unit 120 includes a lower connection line 121 and a liquid level regulating valve 122.

The lower connection line 121 connects the liquid phase, which is present in the lower portion of the first tank 20A, and the lower portion of the second tank 30A.

The liquid level regulating valve 122 is provided in the middle of the lower connection line 121. The liquid level regulating valve 122 is configured to be capable of opening and closing a flow passage in the lower connection line 121 according to the pressure of the gas phase in the first tank 20A. The liquid level regulating valve 122 is opened and closed according to the pressure of the gas phase in the first tank 20A that is determined by the pressure gauge 29. The operation of the liquid level regulating valve 122 is automatically controlled by the control device (not shown).

The liquid level regulating valve 122 is controlled to be opened in a case where the pressure of the gas phase in the first tank 20A is equal to or higher than a preset reference pressure in a state where the liquid level of the liquid phase in the first tank 20A is higher than the liquid level of the liquid phase in the second tank 30A. In a case where the liquid level regulating valve 122 is opened in a state where the liquid level of the liquid phase in the first tank 20A is higher than the liquid level of the liquid phase in the second tank 30A, the liquid phase in the first tank 20A communicates with the lower portion of the second tank 30A. Accordingly, the liquid level of the liquid phase in the first tank 20A is lowered, and the pressure of the gas phase in the first tank 20A is reduced.

Further, the liquid level regulating valve 122 is controlled to be opened in a case where the pressure of the gas phase in the first tank 20A is lower than a preset lower limit pressure in a state where the liquid level of the liquid phase in the first tank 20A is lower than the liquid level of the liquid phase in the second tank 30A. As the liquid level regulating valve 122 is opened in a case where the pressure of the gas phase in the first tank 20A is lower than the preset lower limit pressure in a state where the liquid level of the liquid phase in the first tank 20A is lower than the liquid level of the liquid phase in the second tank 30A, the liquid phase in the second tank 30A returns to the lower portion of the first tank 20A through the lower connection line 121. Accordingly, the liquid level of the liquid phase in the first tank 20A rises.

### (Ammonia abatement method)

Next, an ammonia abatement method for a floating body according to the second embodiment will be described with reference to the drawings.

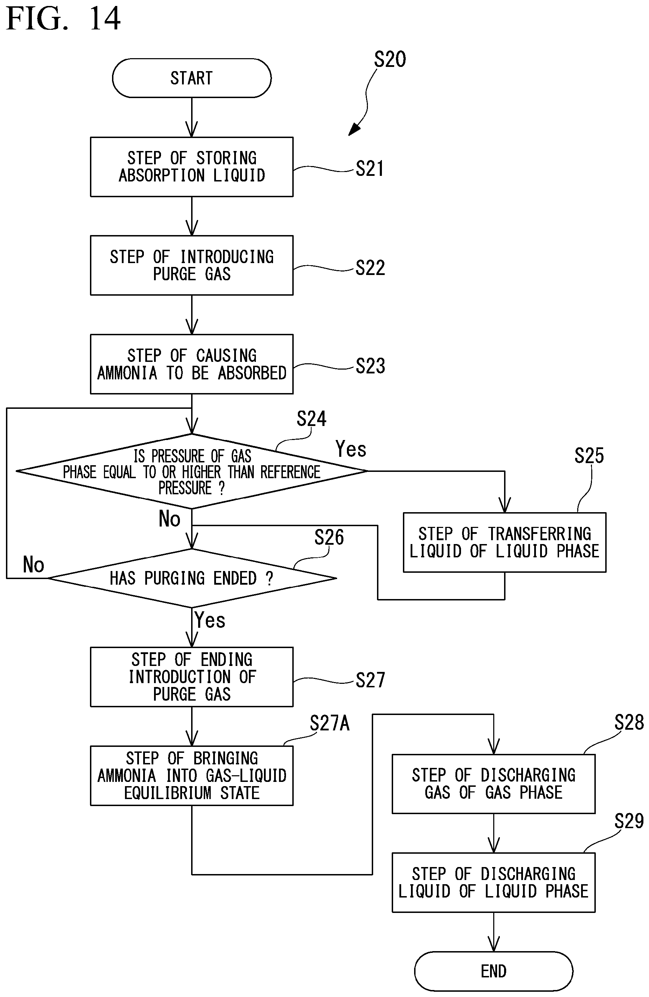

FIG. 14 is a flowchart of the ammonia abatement method according to the second embodiment of the present disclosure.

As shown in FIG. 14, the ammonia abatement method S20 according to the second embodiment includes Step S21 of storing an absorption liquid L, Step S22 of introducing purge gas, Step S23 of causing ammonia to be absorbed, Step S24 of checking the pressure of a gas phase, Step S25 of transferring a liquid phase, Step S26 of checking the end of purging, Step S27 of ending the introduction of the purge gas, Step S27A of bringing ammonia into a gas-liquid equilibrium state, Step S28 of discharging the gas phase, and Step S29 of discharging liquid of the liquid phase.

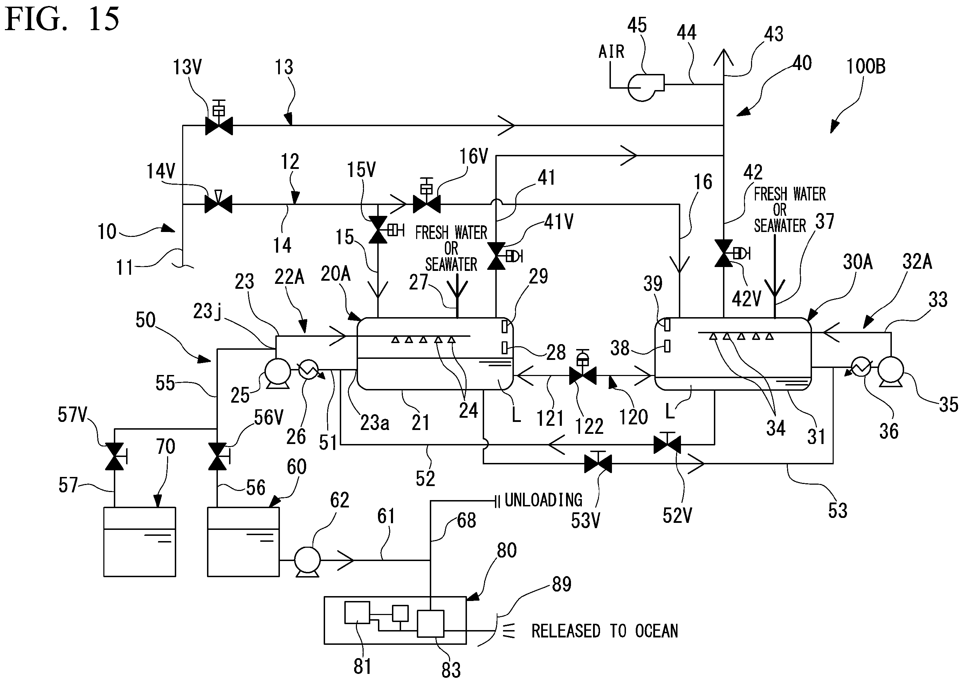

FIG. 15 is a diagram showing a step of storing an absorption liquid in the second embodiment of the present disclosure.

In Step S21 of storing the absorption liquid L, the absorption liquid L is stored in the first tank 20A as shown in FIG. 15 before inert gas is fed into the piping system including a fuel system of the combustion device 8 to perform purging. Fresh water or seawater is taken in from the outside of the first tank 20A through the water intake pipe 27 as the absorption liquid L. The absorption liquid L is stored until the liquid level determined by the liquid level gauge 28 reaches a preset liquid level. Further, the absorption liquid L may also be stored in the second tank 30A in Step S21. However, in this case, the liquid level of the absorption liquid L in the second tank 30A, which is determined by the liquid level gauge 38, is set to be lower than the liquid level of the absorption liquid L in the first tank 20A.

Furthermore, all of the on-off valves 13V, 14V, and 15V, the liquid level regulating valve 122, the flow regulating valves 41V and 42V, and the on-off valves 52V, 53V, 56V, and 57V are closed.

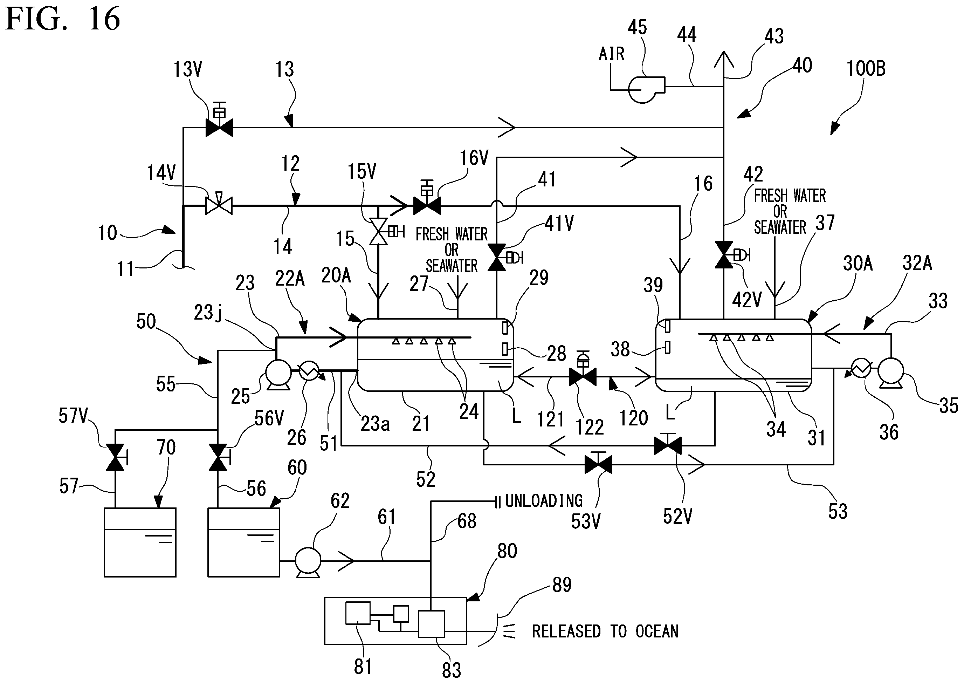

FIG. 16 is a diagram showing a step of introducing purge gas and a step of causing ammonia to be absorbed in the second embodiment of the present disclosure.

In Step S22 of introducing the purge gas, the purge gas containing ammonia and the inert gas is introduced into the first tank 20A in a case where the inert gas is fed into the piping system to perform purging. In this case, only the on-off valves 14V and 15V of the tank introduction line 12 are opened as shown in FIG. 16. Then, the purge gas is introduced into the first tank 20A from the main introduction line 11 through the main pipe 14 and the first introduction line 15 of the tank introduction line 12.

In Step S23 of causing ammonia to be absorbed, an ammonia component contained in the purge gas introduced into the first tank 20A is caused to be absorbed by the absorption liquid L. In this case, in the first absorption promoting unit 22A, the circulation pump 25 is operated to suck the liquid of the liquid phase, which is present in the first tank 20A, into the first circulation line 23 and to spray the liquid from the sprays 24 into the gas phase present in the upper portion of the first tank 20A. Accordingly, the absorption liquid L contained in the liquid of the liquid phase comes into contact with the ammonia present in the gas phase in the first tank 20A and the absorption of the ammonia is promoted. Step S23 may be performed in parallel with Step S22 of introducing the purge gas.

Incidentally, in a case where the purging of the piping system is to be performed, a large amount of inert gas is fed. For this reason, the purge gas is sequentially fed into the first tank 20A. The ammonia contained in the purge gas fed into the first tank 20A is absorbed by the absorption liquid L. Accordingly, the concentration of the inert gas, which is difficult to be absorbed by the absorption liquid L, is increased in the gas phase in the first tank 20A. In this case, the inside of the first tank 20A is formed as a closed space, and the pressure of the gas phase is sequentially increased.

In Step S24 of checking the pressure of the gas phase, the pressure of the gas phase in the first tank 20A is determined by the pressure gauge 29 at every preset time interval during the continuation of Step S22 and Step S23. Data of the pressure of the gas phase determined by the pressure gauge 29 is output to the control device (not shown).

In a case where the control device acquires the data of the pressure of the gas phase determined by the pressure gauge 29, the control device determines whether or not the determined pressure is equal to or higher than a preset reference pressure.

As a result, in a case where the determined pressure of the gas phase in the first tank 20A is lower than the reference pressure ("No" in Step S24), Steps S22 and S23 are continued as they are.

On the other hand, in a case where the determined pressure of the gas phase in the first tank 20A is equal to or higher than the reference pressure ("Yes" in Step S24), the process proceeds to Step S25.

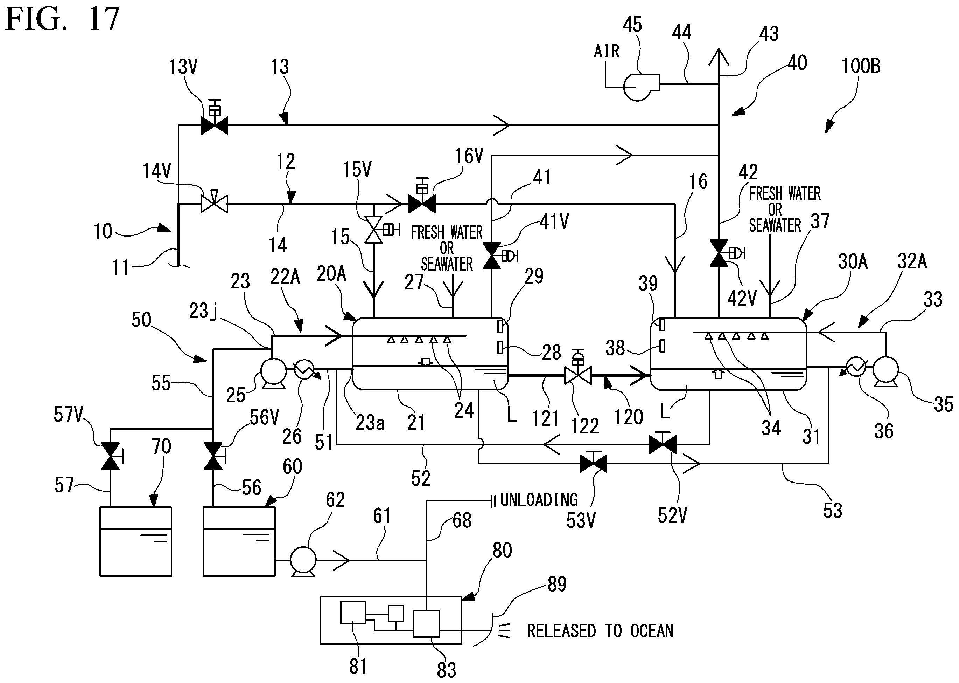

FIG. 17 is a diagram showing a step of transferring liquid of a liquid phase in the second embodiment of the present disclosure.

In Step S25 of transferring the liquid of the liquid phase, the liquid level regulating valve 122 is opened under the control of the control device as shown in FIG. 17. Step S25 is performed in a state where the pressure of the gas phase in the first tank 20A determined by the pressure gauge 29 is higher than the pressure of the gas phase in the second tank 30A determined by the pressure gauge 39 and the liquid level of the liquid phase in the first tank 20A determined by the liquid level gauge 28 is higher than the liquid level of the liquid phase in the second tank 30A determined by the liquid level gauge 38. Then, the liquid of the liquid phase in the first tank 20A is transferred into the second tank 30A through the lower connection line 121. Accordingly, the pressure of the gas phase in the first tank 20A is reduced. As a result, the total amount of the purge gas, which is sequentially fed, can be received by the first tank 20A.

As Step S23 is continued in parallel with Step S25, the ammonia contained in the purge gas fed into the first tank 20A is absorbed by the absorption liquid L. Accordingly, the concentration of the inert gas is increased in the gas phase in the first tank 20A.

In Step S26 of checking the end of the purging, the control device checks whether or not the supply of the inert gas for the purging of the piping system has ended.

As a result, in a case where it cannot be checked that the supply of the inert gas has not ended and the purging has ended ("No" in Step S26), the process returns to Step S24.

On the other hand, in a case where it can be checked that the supply of the inert gas has ended and the purging has ended ("Yes" in Step S26), the process proceeds to Step S27.

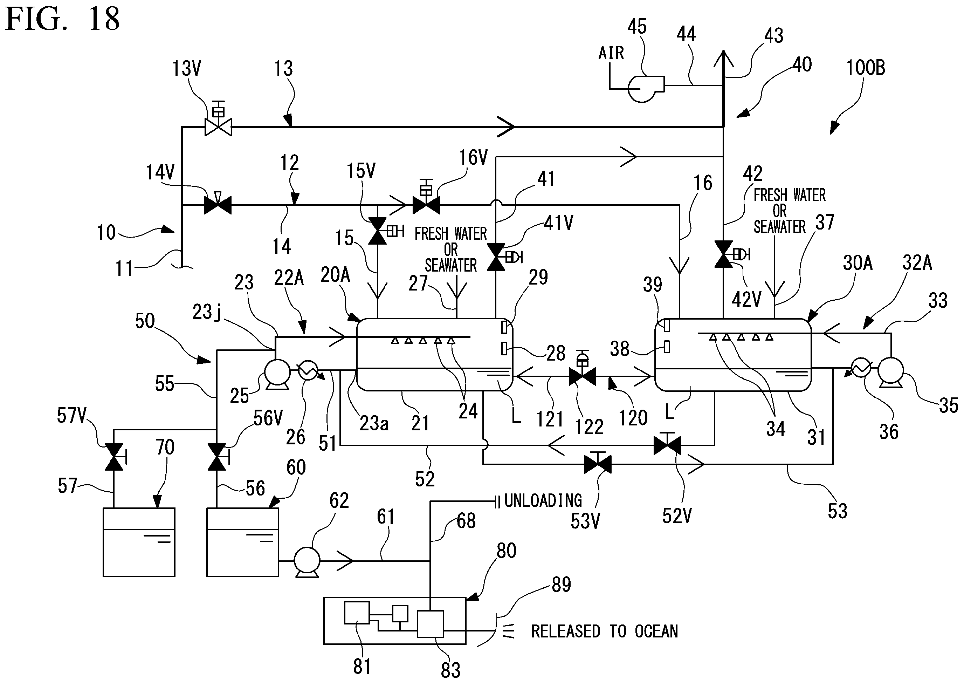

FIG. 18 is a diagram showing a step of ending the introduction of the purge gas in the second embodiment of the present disclosure.

In Step S27 of ending the introduction of the purge gas, the on-off valves 14V and 15V are closed and the on-off valve 13V of the bypass line 13 is opened as shown in FIG. 18 after it is checked that the supply of the inert gas to the piping system ends. In the last stage of the purging of the piping system, the purge gas is substantially inert gas and has a low ammonia content. Therefore, the on-off valve 13V is opened and the purge gas is released into the atmosphere from the atmosphere release line 43 via the bypass line 13. Accordingly, pressure in the piping system is reduced. After the pressure in the piping system is sufficiently reduced, the on-off valve 13V is closed.

Further, in Step S27, the liquid level regulating valve 122 is closed in a case where the liquid level regulating valve 122 is open. Furthermore, in the first absorption promoting unit 22A, the liquid of the liquid phase in the first tank 20A continues to be circulated to the sprays 24 and continues to be sprayed into the gas phase present in the upper portion of the first tank 20A.

In Step S27A of bringing the ammonia into a gas-liquid equilibrium state, the ammonia is brought into a gas-liquid equilibrium state between the gas phase and the liquid phase in the first tank 20A. In a case where the liquid continues to be sprayed into the gas phase present in the upper portion of the first tank 20A, the absorption liquid L contained in the liquid of the liquid phase in the first tank 20A comes into contact with the ammonia present in the gas phase in the first tank 20A. Accordingly, the ammonia concentration of the gas phase is gradually reduced. The gas phase and the absorption liquid (liquid phase) in the first tank 20A tend to be brought into a gas-liquid equilibrium state. That is, as the ammonia solubility of the absorption liquid is increased, the ammonia concentration of the gas phase is also gradually increased. On the other hand, in a case where the ammonia concentration of the gas phase is reduced, the ammonia of the liquid phase is emitted due to a difference in partial pressure and is sequentially supplied to the gas phase. As a result, the ammonia solubility of the liquid phase is reduced. In a case where the ammonia concentration is equilibrated between the gas phase and the liquid phase in the first tank 20A and the ammonia is brought into a gas-liquid equilibrium state in the first tank 20A, the process proceeds to Step S28. For example, the pressure and temperature in the first tank 20A or the ammonia concentration in the first tank 20A may be directly measured to determine the gas-liquid equilibrium state of the ammonia.

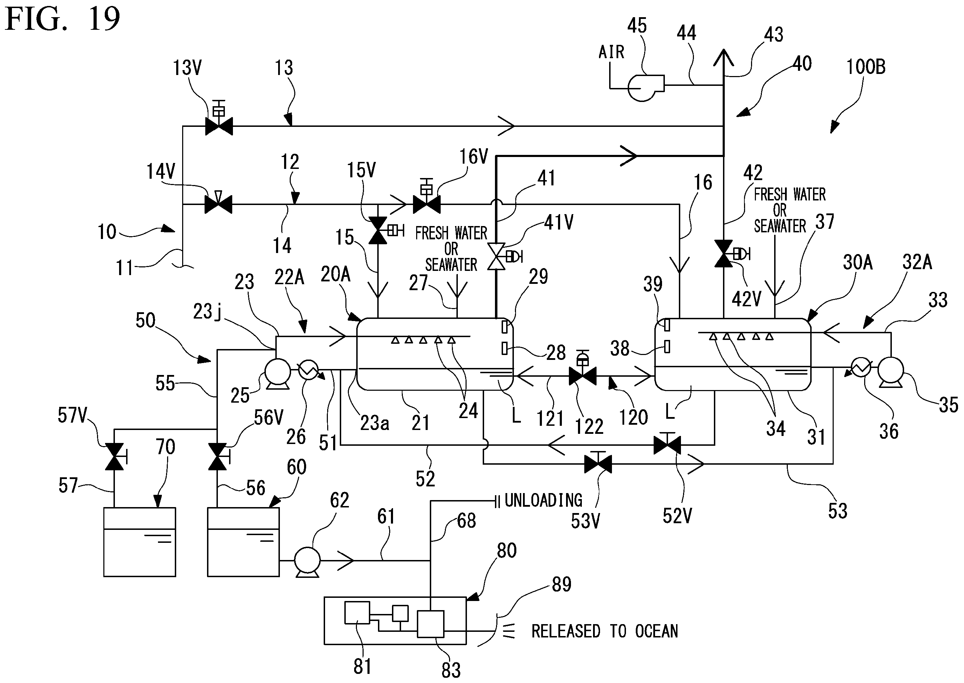

FIG. 19 is a diagram showing a step of discharging the gas of the gas phase in the second embodiment of the present disclosure.

In Step S28 of discharging the gas phase, as shown in FIG. 19, the circulation pump 25 is stopped, and the circulation of the absorption liquid L (liquid phase) in the first tank 20A and the spray of the liquid from the sprays 24 are stopped. Further, the flow regulating valve 41V is opened, and the gas of the gas phase in the first tank 20A is released into the atmosphere through the first gas discharge line 41 and the atmosphere release line 43. At this time, in a case where the ammonia concentration of the gas released through the atmosphere release line 43 is high, the flow rate of the purge gas discharged from the first tank 20A to the first gas discharge line 41 is reduced by the flow regulating valve 41V. Accordingly, the ammonia concentration of the gas released through the atmosphere release line 43 is suppressed. Furthermore, in a case where the dilution fan 45 is operated to increase the flow rate of the diluent gas to be fed into the atmosphere release line 43, the ammonia concentration of the gas released through the atmosphere release line 43 can be further suppressed. After the gas phase in the first tank 20A is discharged, the flow regulating valve 41V is closed.

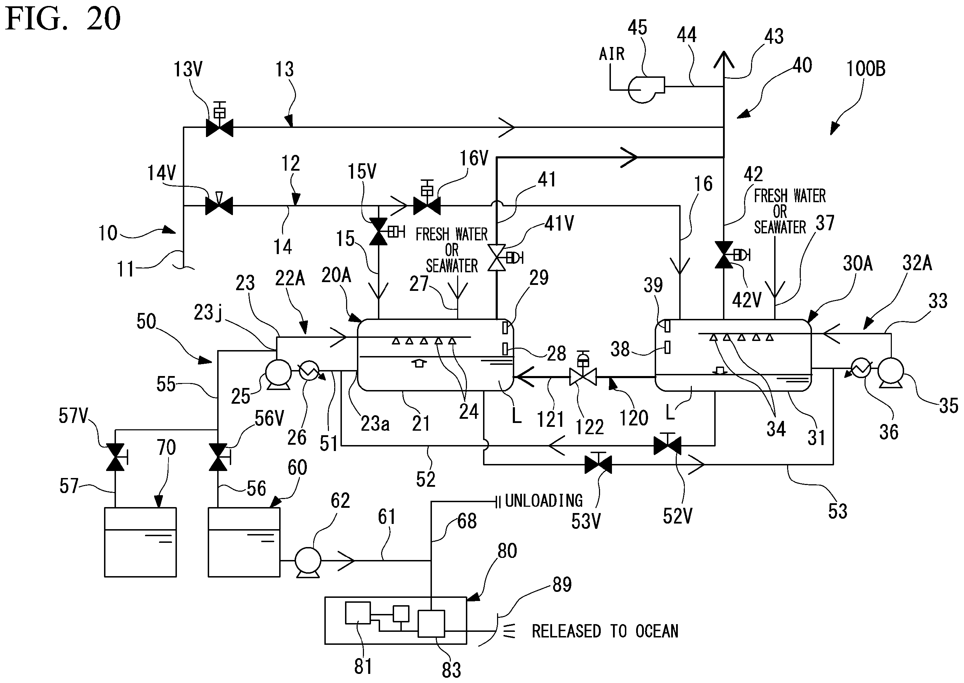

FIG. 20 is a diagram showing a state following FIG. 19 in the step of discharging the gas of the gas phase in the second embodiment of the present disclosure.

Further, as the gas phase in the first tank 20A is released into the atmosphere as shown in FIG. 20 in Step S28 of discharging the gas of the gas phase, the pressure of the gas phase in the first tank 20A is reduced. In a case where the pressure of the gas phase in the first tank 20A determined by the pressure gauge 29 is lower than the pressure of the gas phase in the second tank 30A determined by the pressure gauge 39 and is lower than the preset lower limit pressure, the liquid level regulating valve 122 is opened. Then, the liquid of the liquid phase in the second tank 30A returns to the lower portion of the first tank 20A through the lower connection line 121. Since the liquid of the liquid phase in the second tank 30A returns to the lower portion of the first tank 20A, the liquid level of the liquid phase in the first tank 20A rises. Accordingly, the liquid of the gas phase in the first tank 20A can be pushed out to the first gas discharge line 41.

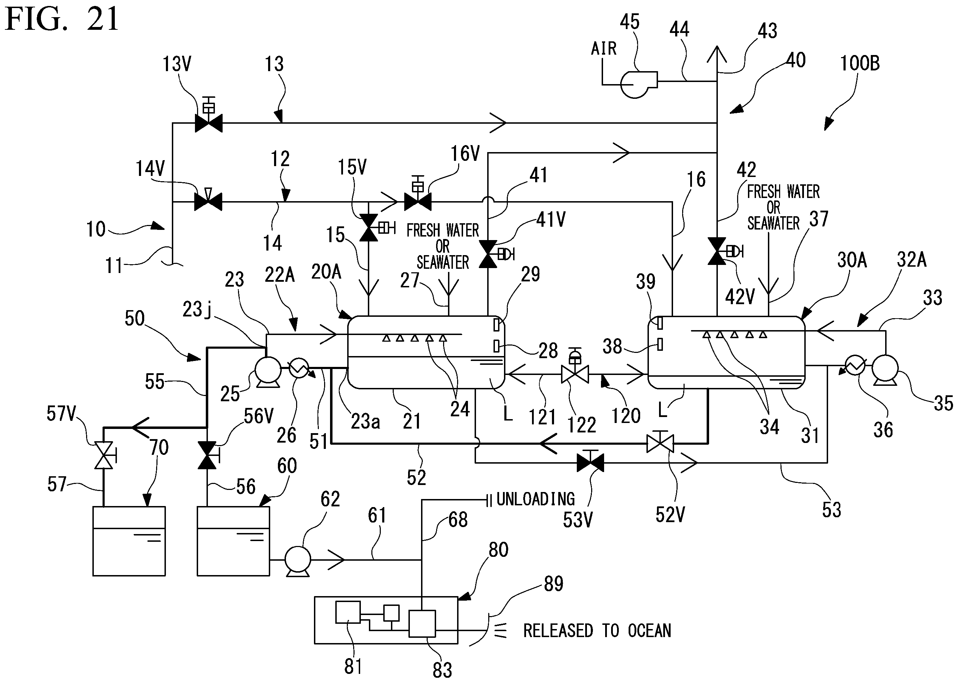

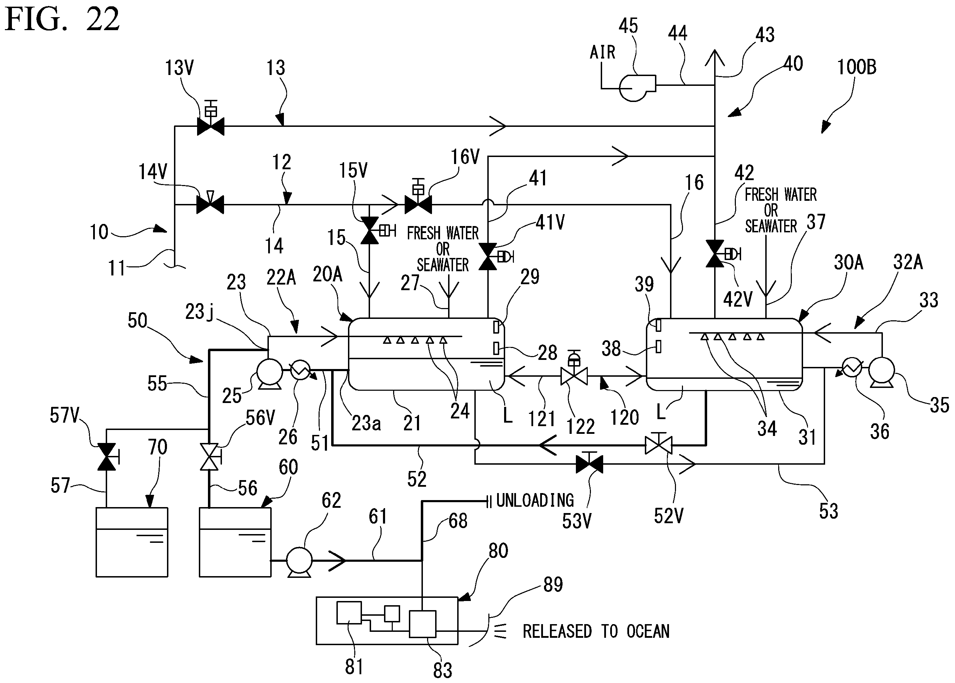

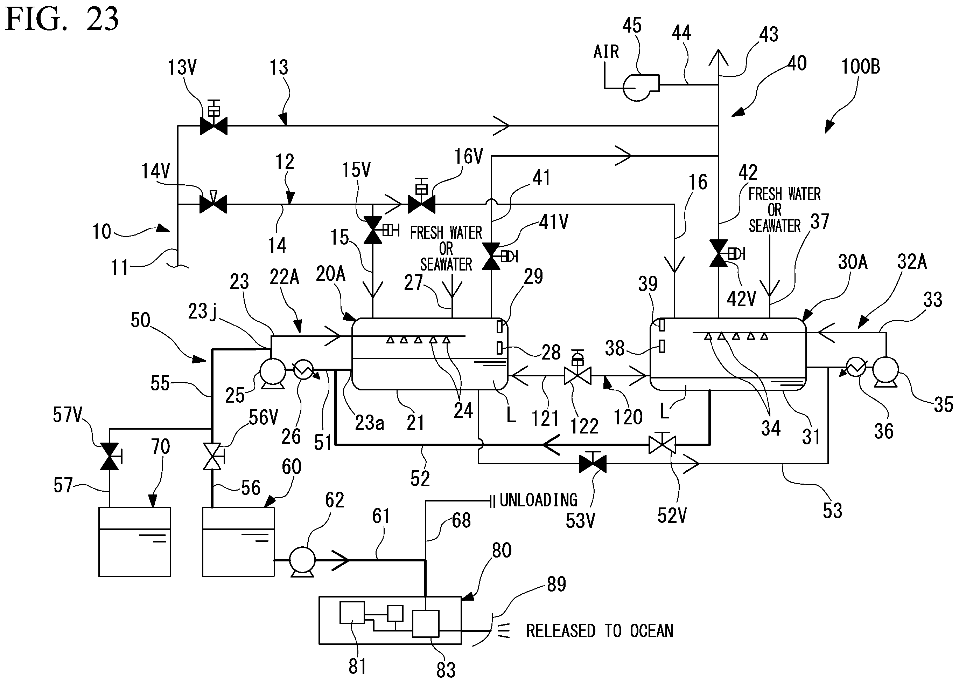

FIG. 21 is a diagram showing a case where the liquid of the liquid phase is discharged to the second wastewater tank in a step of discharging the liquid of the liquid phase in the second embodiment of the present disclosure. FIG. 22 is a diagram showing a case where the liquid of the liquid phase is unloaded in the step of discharging liquid of the liquid phase in the second embodiment of the present disclosure. FIG. 23 is a diagram showing a case where the liquid of the liquid phase is treated by the ammonia component removal unit in the step of discharging the liquid of the liquid phase in the second embodiment of the present disclosure.

In Step S29 of discharging the liquid phase, the liquid of the liquid phase is discharged by the drainage unit 50 in a case where the ammonia concentration of the liquid of the liquid phase remaining in the first tank 20A exceeds a preset reference concentration. Step S29 may be performed before Step S28 of discharging the gas phase, or may be performed in parallel with Step S28.

In Step S29, the circulation pump 25 is operated. Accordingly, as shown in FIGS. 21 to 23, the liquid of the liquid phase in the first tank 20A is drained through the first liquid discharge line 51 and the drain line 55. Further, in a case where liquid remains in the second tank 30A, the on-off valve 52V is opened, so that the liquid of the liquid phase in the second tank 30A is drained through the second liquid discharge line 52, the first liquid discharge line 51, and the drain line 55.

At this time, in a case where fresh water is introduced into the first tank 20A and the second tank 30A, the on-off valve 56V is closed and the on-off valve 57V is opened as shown in FIG. 21. Accordingly, the liquid remaining in the first tank 20A and the second tank 30A is drained to the second wastewater tank 70 and can be used as a reducing agent for the denitrification device. Further, in a case where fresh water is introduced into the first tank 20A and the second tank 30A, any further treatment is not performed in the floating body 1 and the on-off valve 56V is opened and the on-off valve 57V is closed as shown in FIG. 22, so that the liquid may be stored in the first wastewater tank 60 and may be unloaded from the unloading line 68.

Furthermore, in a case where seawater is introduced into the first tank 20A and the second tank 30A, the on-off valve 56V is opened and the on-off valve 57V is closed. Accordingly, as shown in FIG. 23, the liquid containing seawater, which remains in the first tank 20A and the second tank 30A, is sent to the ammonia component removal unit 80 via the first wastewater tank 60. The liquid is released to the ocean from the discharge unit 89 after being subjected to treatment for removing an ammonia component by the ammonia component removal unit 80. In addition, even in a case where seawater is introduced into the first tank 20A and the second tank 30A, as shown in FIG. 22, any further treatment is not performed in the floating body 1 and the liquid may be stored in the first wastewater tank 60 and may be unloaded from the unloading line 68.

After Step S29 of discharging the liquid phase is performed before Step S28 of discharging the gas of the gas phase is performed, the absorption liquid L may be stored in the first tank 20A and the second tank 30A again as in Step S21. Accordingly, it is possible to increase the ammonia absorption efficiency of the gas that remains in the first tank 20A and the second tank 30A.

### (Effects)

According to the above-described configuration, the first tank 20A and the second tank 30A provided independently of the first tank 20A are connected to each other by the lower connection line 121. In a case where the liquid level regulating valve 122 is opened according to the pressure of the gas phase in the first tank 20A, the liquid of the liquid phase in the lower portion of the first tank 20A is transferred to the lower portion of the second tank 30A. Accordingly, the volume of the gas phase in the first tank 20A is increased, and the pressure of the gas phase is reduced. Therefore, the purge gas flowing in thereafter can be further received by the first tank 20A. As a result, the purge gas that flows in a large amount during the purging can be received by the first tank 20A, so that a larger amount of ammonia can be caused to be absorbed.

Further, in the first tank 20A, the ammonia contained in the purge gas is absorbed by the absorption liquid L, so that the ammonia concentration of the gas phase is reduced. Then, the gas of the gas phase is discharged. As described above, in the first tank 20A, so-called continuous treatment of continuously discharging the gas in which ammonia is absorbed while absorbing ammonia contained in the introduced purge gas is not performed, but batch treatment is performed. For this reason, it is not necessary to provide an absorption tower or the like on the downstream side of the first tank 20A, and it is possible to efficiently treat purge gas while sufficiently absorbing ammonia. Therefore, the occurrence of a phenomenon such as flooding in which water supplied into a closed space of an absorption tower or the like flows back upward due to the flow of the inert gas is also suppressed.

In addition, in the above-described embodiment, the liquid level regulating valve 122 is opened to feed the liquid of the liquid phase in the first tank 20A into the lower portion of the second tank 30A in a case where the pressure of the gas phase in the first tank 20A is equal to or higher than a preset reference pressure. Therefore, an excessive increase in the pressure of the gas phase in the first tank 20A is suppressed by the inert gas that is sequentially introduced into the first tank 20A. As a result, a reduction in the ammonia absorption capacity of the absorption liquid L in the first tank 20A is suppressed.

Further, in the above-described embodiment, the liquid level regulating valve 122 can be opened to return the liquid of the liquid phase in the second tank 30A to the lower portion of the first tank 20A in a case where the pressure of the gas phase in the first tank 20A is lower than a preset lower limit pressure. Therefore, an excessive reduction in the pressure of the gas phase in the first tank 20A is suppressed. Furthermore, since the liquid of the liquid phase in the second tank 30A returns to the lower portion of the first tank 20A, the liquid level of the liquid phase in the first tank 20A rises. Accordingly, in a case where the liquid of the gas phase in the first tank 20A is discharged through the first gas discharge line 41, the gas of the gas phase in the first tank 20A can be efficiently pushed out and discharged.

### (Other embodiments)

The embodiments of the present disclosure have been described in detail above with reference to the drawings. However, specific configurations are not limited to the embodiments, and include a design modification or the like without departing from the scope of the present disclosure.

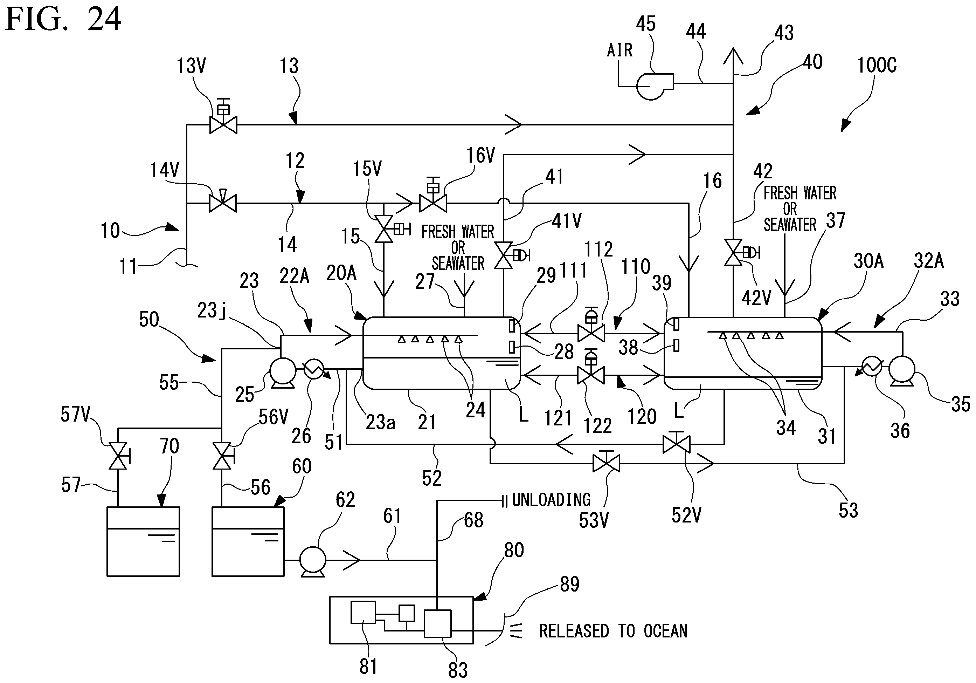

The pressure regulating unit 110 is provided in the ammonia abatement system 100A according to the first embodiment, and the liquid level regulating unit 120 is provided in the ammonia abatement system 100B according to the second embodiment. On the other hand, both the pressure regulating unit 110 and the liquid level regulating unit 120 may be provided as in an ammonia abatement system 100C shown in FIG. 24. In this case, the ammonia abatement method S10 shown in FIG. 3 and the ammonia abatement method S20 shown in FIG. 14 may be combined as appropriate.

Further, in the first and second embodiments and modification examples thereof, the sprays 24 are provided as the first absorption promoting unit 22A, and the sprays 34 are provided as the second absorption promoting unit 32A. However, the present disclosure is not limited thereto.

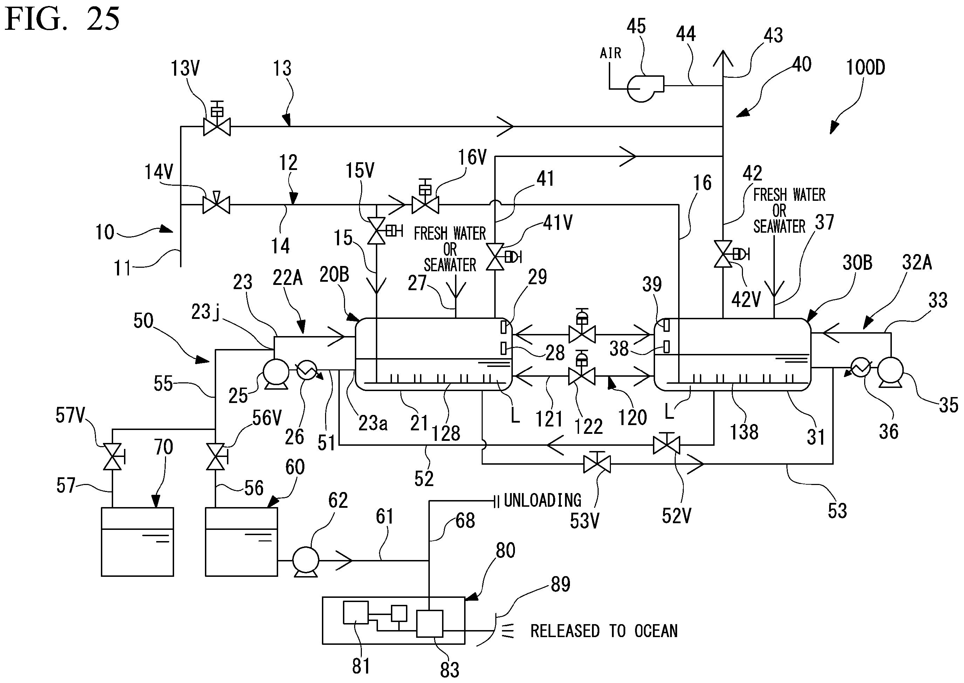

FIG. 25 is a diagram showing the configuration of an ammonia abatement system according to another modification example of the first and second embodiments of the present disclosure.

As shown in FIG. 25, the ammonia abatement system 100D may include a nozzle 128 as a first absorption promoting unit 22B and a nozzle 138 as a second absorption promoting unit 32B.

The nozzle 128 is immersed in a liquid phase in a first tank 20B. The nozzle 128 diffuses purge gas, which is introduced from the first introduction line 15, into the liquid phase in the first tank 20B in the form of bubbles.

The nozzle 138 is immersed in a liquid phase in a second tank 30B. The nozzle 138 diffuses purge gas, which is introduced from the second introduction line 16, into the liquid phase in the second tank 30B in the form of bubbles. Since the purge gas is diffused into the liquid phase from such nozzles 128 and 138, ammonia contained in the purge gas is easily absorbed by an absorption liquid L contained in the liquid phase.

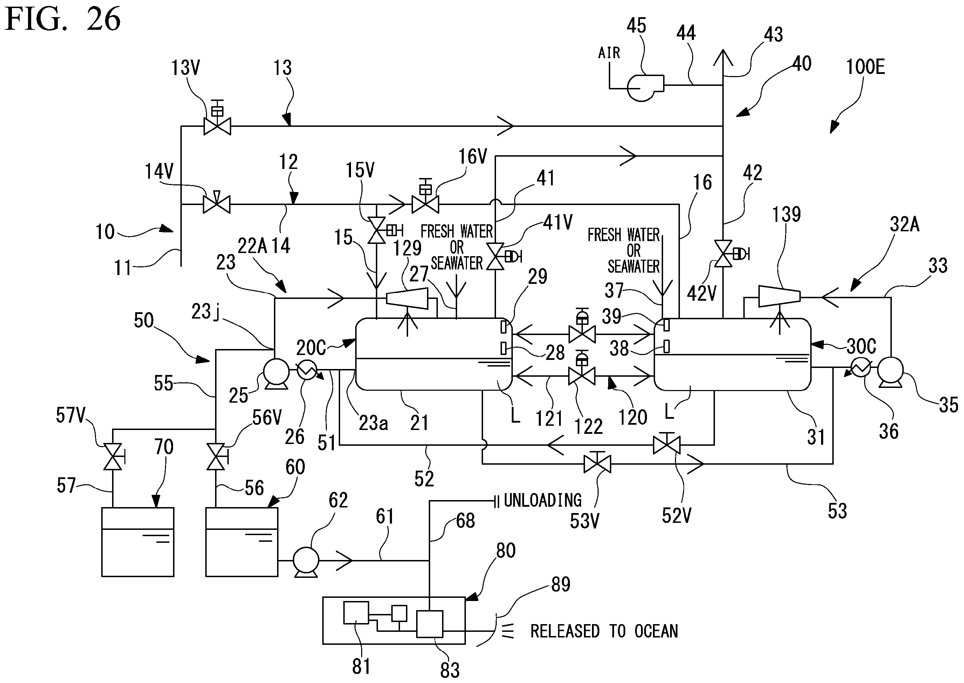

FIG. 26 is a diagram showing the configuration of an ammonia abatement system according to still another modification example of the first and second embodiments of the present disclosure.

As shown in FIG. 26, the ammonia abatement system 100E may include an ejector 129 as a first absorption promoting unit 22C and an ejector 139 as a second absorption promoting unit 32C.

The ejector 129 sucks out gas of a gas phase in a first tank 20C, mixes the gas with purge gas introduced from the first introduction line 15, and returns a mixture of the gas and the purge gas to the first tank 20C.

The ejector 139 sucks out gas of a gas phase in a second tank 30C, mixes the gas with purge gas introduced from the second introduction line 16, and returns a mixture of the gas and the purge gas to the second tank 30C. Since the purge gas is diffused into a liquid phase from the ejectors 129 and 139, ammonia contained in the purge gas is easily absorbed by an absorption liquid L contained in the liquid phase.

Further, the second liquid discharge line 52 and the third liquid discharge line 53 are provided in the first and second embodiments and each of the modification examples thereof. The circulation pump 25 is operated to transfer the liquid of the liquid phase in the second tank 30A to the first tank 20A through the second liquid discharge line 52 in a case where, for example, the liquid level regulating valve 122 of the liquid level regulating unit 120 is out of order. Similarly, the circulation pump 35 is operated to transfer the liquid of the liquid phase in the first tank 20A to the second tank 30A through the third liquid discharge line 53 in a case where, for example, the liquid level regulating valve 122 of the liquid level regulating unit 120 is out of order.

Furthermore, the second tanks 30A to 30C include the second absorption promoting units 32A to 32C and the like in the first and second embodiments and each of the modification examples thereof. Accordingly, in a case where the first tanks 20A to 20C cannot be used for some reason, the second tanks 30A to 30C can be used instead of the first tanks 20A to 20C. However, the present disclosure is not limited thereto. The second tanks 30A to 30C may not include the second absorption promoting units 32A to 32C and the like.

In addition, in the second embodiment, the liquid of the liquid phase in the first tank 20A is transferred to the second tank 30A in a case where the pressure of the gas phase in the first tank 20A is increased. However, the present disclosure is not limited thereto. For example, in a case where the pressure of the gas phase in the first tank 20A is increased, the liquid of the liquid phase in the first tank 20A may be drained to the first wastewater tank 60 and the second wastewater tank 70 so that the pressure of the gas phase in the first tank 20A is reduced.

Further, the configuration of the ammonia component removal unit 80 has been provided as an exemplary example in the first and second embodiments and each of the modification examples thereof. However, as long as being capable of removing an ammonia component contained in ammonia water, the ammonia component removal unit 80 is not limited to an ammonia component removal unit including the denitrification unit 83 and other types of ammonia component removal units may be used as appropriate.

Furthermore, water generated by the denitrification reaction in the denitrification unit 83 has been discharged from the discharge unit 89 into the surrounding seawater in the first and second embodiments and each of the modification examples thereof, but the present disclosure is not limited thereto. For example, the water generated by the denitrification reaction may be used in the marine vessel.

In addition, the treatment of the treated water stored in the second wastewater tank 70 has been provided as an exemplary example in the first and second embodiments and each of the modification examples thereof, but treatment other than the treatment provided as an exemplary example above may be performed.

For example, in a case where fresh water is introduced into the first tank 20A and the second tank 30A, the liquid (ammonia water) stored in the second wastewater tank 70 may be charged into a combustion device such as a combustion furnace, an engine, or a boiler and burned.

Further, in a case where fresh water is introduced into the first tank 20A and the second tank 30A, treatment such as a stripping method of blowing steam or air into the liquid stored in the second wastewater tank 70 to separate ammonia gas and water may be performed.

Furthermore, in the first and second embodiments and each of the modification examples thereof, the ammonia concentration of gas to be discharged is reduced by the dilution fan 45 in a case where the gas of the gas phase in the first tank 20A is released into the atmosphere through the atmosphere release line 43. However, the present disclosure is not limited thereto. For example, the gas of the gas phase in the first tank 20A may be released into the atmosphere after being subjected to, for example, ammonia concentration reducing treatment using contact with water, ammonia concentration reducing treatment using a catalytic reaction, ammonia abatement treatment performed with combustion using a gas combustion device (GCU), or the like.

### <Supplementary Note>

The ammonia abatement systems 100A to 100E, the floating body 1, and the ammonia abatement method S10 described in the embodiments are understood as follows, for example.

(1) Ammonia abatement systems 100A and 100C to 100E according to a first aspect includes first tanks 20A to 20C that store an absorption liquid L capable of absorbing ammonia, a first introduction line 15 that can introduce purge gas containing ammonia and inert gas into the first tanks 20A to 20C, first absorption promoting units 22A to 22C that promote absorption of ammonia to be performed by the absorption liquid L in the first tanks 20A to 20C, a first liquid discharge line 51 that can discharge liquid from a liquid phase in the first tanks 20A to 20C, a first gas discharge line 41 that can discharge gas from a gas phase in the first tanks 20A to 20C, second tanks 30A to 30C that are provided independently of the first tanks 20A to 20C, an upper connection line 111 that connects the gas phase in upper portions in the first tanks 20A to 20C and upper portions in the second tanks 30A to 30C, and a pressure regulating valve 112 that is provided in the upper connection line 111 and can be opened and closed according to a pressure of the gas phase in the first tanks 20A to 20C.

In the ammonia abatement systems 100A and 100C to 100E, in a case where the inert gas is fed to a pipe or the like through which ammonia flows to purge the pipe or the like with the inert gas, the purge gas containing ammonia and the inert gas is introduced into the first tanks 20A to 20C from the first introduction line 15. The ammonia contained in the introduced purge gas is absorbed by the absorption liquid L stored in the first tanks 20A to 20C. In this case, the absorption of ammonia to be performed by the absorption liquid L in the first tanks 20A to 20C is promoted by the first absorption promoting units 22A to 22C. The absorption liquid L having absorbed ammonia in the first tanks 20A to 20C, that is, the liquid of the liquid phase in the first tanks 20A to 20C is discharged from the first tanks 20A to 20C through the first liquid discharge line 51. The gas of the gas phase in the first tanks 20A to 20C, of which the ammonia concentration is reduced since ammonia is absorbed by the absorption liquid L in the first tanks 20A to 20C, is discharged from the first tanks 20A to 20C through the first gas discharge line 41.

In a case where the inert gas contained in the purge gas is difficult to be absorbed by the absorption liquid L in the first tanks 20A to 20C, the inert gas remaining without being absorbed by the absorption liquid L is accumulated in the gas phase in the first tanks 20A to 20C. As the purging progresses, a ratio (flow rate) of the inert gas in the purge gas introduced into the first tanks 20A to 20C is increased. The pressure of the gas phase in the first tanks 20A to 20C is increased by the inert gas that is sequentially introduced into the first tanks 20A to 20C in this way. The first tanks 20A to 20C and the second tanks 30A to 30C are connected to each other by the upper connection line 111. In a case where the pressure regulating valve 112 is opened according to the pressure of the gas phase in the first tanks 20A to 20C, the gas of the gas phase in the upper portions of the first tanks 20A to 20C is transferred to the upper portions of the second tanks 30A to 30C. Accordingly, the pressure of the gas phase in the first tanks 20A to 20C is reduced. Therefore, the purge gas flowing in thereafter can be further received by the first tanks 20A to 20C. As a result, the purge gas that flows in a large amount during the purging can be received by the first tanks 20A to 20C, so that a larger amount of ammonia can be caused to be absorbed. Further, in a case where the inert gas is discharged from the first tanks 20A to 20C through the first gas discharge line 41, the pressure of the inert gas is reduced. Therefore, even in a case where a closed space is provided on the downstream side of the first gas discharge line 41, the occurrence of a phenomenon such as flooding in which water supplied into the closed space flows back upward due to the flow of the inert gas is suppressed.

Therefore, it is possible to ensure ammonia absorption capacity during the purging.

(2) Ammonia abatement systems 100A and 100C to 100E according to a second aspect are the ammonia abatement systems 100A and 100C to 100E of (1) in which, in a case where the pressure of the gas phase in the first tanks 20A to 20C is equal to or higher than a preset reference pressure, the pressure regulating valve 112 is opened and causes the gas phase in the first tanks 20A to 20C to communicate with the upper portions of the second tanks 30A to 30C.

Accordingly, the pressure regulating valve 112 is opened to cause the gas phase in the first tanks 20A to 20C to communicate with the upper portions of the second tanks 30A to 30C in a case where the pressure of the gas phase in the first tanks 20A to 20C is equal to or higher than the preset reference pressure. Therefore, an excessive increase in the pressure of the gas phase in the first tanks 20A to 20C is suppressed by the inert gas that is sequentially introduced into the first tanks 20A to 20C.

(3) Ammonia abatement systems 100C to 100E according to a third aspect are the ammonia abatement systems 100C to 100E of any one of (1) or (2) further including a lower connection line 121 that connects the liquid phase in lower portions in the first tanks 20A to 20C and lower portions in the second tanks 30A to 30C, and a liquid level regulating valve 122 that is provided in the lower connection line 121 and that can be opened and closed according to the pressure of the gas phase in the first tanks 20A to 20C.

Accordingly, the first tanks 20A to 20C and the second tanks 30A to 30C are connected to each other by the lower connection line 121. In a case where the liquid level regulating valve 122 is opened according to the pressure of the gas phase in the first tanks 20A to 20C, the liquid phase in the lower portions of the first tanks 20A to 20C is transferred to the lower portions of the second tanks 30A to 30C. Accordingly, the volume of the gas phase in the first tanks 20A to 20C is increased, and the pressure of the gas phase is reduced. Therefore, the purge gas flowing in thereafter can be further received by the first tanks 20A to 20C. As a result, the purge gas that flows in a large amount during the purging can be received by the first tanks 20A to 20C, so that a larger amount of ammonia can be caused to be absorbed.

(4) Ammonia abatement systems 100C to 100E according to a fourth aspect are the ammonia abatement systems 100C to 100E of (3) in which, in a case where the pressure of the gas phase in the first tanks 20A to 20C is equal to or higher than a preset reference pressure, the liquid level regulating valve 122 is opened and causes the liquid phase in the first tanks 20A to 20C to communicate with the lower portions of the second tanks 30A to 30C.

Accordingly, the liquid level regulating valve 122 is opened to feed the liquid phase in the first tanks 20A to 20C into the lower portions of the second tanks 30A to 30C in a case where the pressure of the gas phase in the first tanks 20A to 20C is equal to or higher than the preset reference pressure. Therefore, an excessive increase in the pressure of the gas phase in the first tanks 20A to 20C is suppressed by the inert gas that is sequentially introduced into the first tanks 20A to 20C.

(5) Ammonia abatement systems 100C to 100E according to a fifth aspect are the ammonia abatement systems 100C to 100E of (4) in which, in a case where the pressure of the gas phase in the first tanks 20A to 20C is lower than a preset lower limit pressure, the liquid level regulating valve 122 is opened and returns liquid of a liquid phase in the second tanks 30A to 30C to the lower portions of the first tanks 20A to 20C.

Accordingly, the liquid level regulating valve 122 can be opened to return the liquid of the liquid phase in the second tanks 30A to 30C to the lower portions of the first tanks 20A to 20C in a case where the pressure of the gas phase in the first tanks 20A to 20C is lower than the preset lower limit pressure. Therefore, an excessive reduction in the pressure of the gas phase in the first tanks 20A to 20C is suppressed. Further, since the liquid of the liquid phase in the second tanks 30A to 30C returns to the lower portions of the first tanks 20A to 20C, the liquid level of the liquid phase in the first tanks 20A to 20C rises. Accordingly, the gas of the gas phase in the first tanks 20A to 20C can be efficiently pushed out and discharged through the first gas discharge line 41.

(6) Ammonia abatement systems 100A and 100C to 100E according to a sixth aspect are the ammonia abatement systems 100A and 100C to 100E of any one of (1) to (5) in which the second tanks 30A to 30C store an absorption liquid L capable of absorbing ammonia, and the ammonia abatement systems 100A and 100C to 100E further include a second introduction line 16 that can introduce purge gas containing ammonia and inert gas into the second tanks 30A to 30C, and a second absorption promoting unit 32A that promotes absorption of ammonia to be performed by the absorption liquid L in the second tanks 30A to 30C.

Accordingly, in a case where the purge gas containing ammonia and the inert gas is introduced into the second tanks 30A to 30C from the second introduction line 16, the ammonia contained in the purge gas is absorbed by the absorption liquid L stored in the second tanks 30A to 30C. In this case, the absorption of ammonia to be performed by the absorption liquid L in the second tanks 30A to 30C is promoted by the second absorption promoting unit 32A. In this way, even in the second tanks 30A to 30C, the ammonia contained in the purge bus can be absorbed as in the first tanks 20A to 20C. Therefore, in a case where the absorption of ammonia cannot be performed in the first tanks 20A to 20C for some reason, the absorption of ammonia can be performed in the second tanks 30A to 30C instead of the first tanks 20A to 20C. Therefore, the redundancy of the ammonia abatement systems 100A to 100E can be increased.

(7) Ammonia abatement systems 100A and 100C to 100E according to a seventh aspect are the ammonia abatement systems 100A and 100C to 100E of any one of (1) to (6) further including a flow regulating valve 41V that regulates a flow rate of the gas of the gas phase discharged from the first tanks 20A to 20C through the first gas discharge line 41.

Accordingly, it is possible to reduce the ammonia concentration of the gas phase, which is discharged from the first gas discharge line 41, by reducing the flow rate of the gas of the gas phase in the first tanks 20A to 20C that is discharged through the first gas discharge line 41.

(8) Ammonia abatement systems 100A and 100C to 100E according to an eighth aspect are the ammonia abatement systems 100A and 100C to 100E of any one of (1) to (7) in which the first absorption promoting units 22A to 22C include at least one of a spray 24 that sprays the absorption liquid L into the first tanks 20A to 20C, a nozzle 128 that diffuses the purge gas into the absorption liquid L in the first tanks 20A to 20C, or an ejector 129 that causes the gas of the gas phase in the first tanks 20A to 20C to be sucked into a flow of the absorption liquid L fed into the first tanks 20A to 20C.

Accordingly, the absorption of the ammonia, which is contained in the purge gas, to be performed by the absorption liquid L in the first tanks 20A to 20C can be promoted by the first absorption promoting units 22A to 22C including at least one of the spray 24, the nozzle 128, or the ejector 129.

(9) Ammonia abatement systems 100A and 100C to 100E according to a ninth aspect are the ammonia abatement systems 100A and 100C to 100E of any one of (1) to (8) further including a first circulation line 23 that circulates the liquid of the liquid phase in the first tanks 20A to 20C to the first absorption promoting units 22A to 22C.

Accordingly, the liquid phase in the first tanks 20A to 20C is circulated to the first absorption promoting units 22A to 22C through the first circulation line 23, so that the absorption of ammonia to be performed by the absorption liquid L can be efficiently performed while the absorption liquid L is effectively utilized.

(10) Ammonia abatement systems 100B to 100E according to a tenth aspect include first tanks 20A to 20C that store an absorption liquid L capable of absorbing ammonia, a first introduction line 15 that can introduce purge gas containing ammonia and inert gas into the first tanks 20A to 20C, first absorption promoting units 22A to 22C that promote absorption of ammonia to be performed by the absorption liquid L in the first tanks 20A to 20C, a first liquid discharge line 51 that can discharge liquid from a liquid phase in the first tanks 20A to 20C, a first gas discharge line 41 that can discharge gas from a gas phase in the first tanks 20A to 20C, second tanks 30A to 30C that are provided independently of the first tanks 20A to 20C, a lower connection line 121 that connects the liquid phase in lower portions in the first tanks 20A to 20C and lower portions in the second tanks 30A to 30C, and a liquid level regulating valve 122 that is provided in the lower connection line 121 and can be opened and closed according to a pressure of the gas phase in the first tanks 20A to 20C.

In the ammonia abatement systems 100B to 100E, in a case where the inert gas is fed to a pipe or the like through which ammonia flows to purge the pipe or the like with the inert gas, the purge gas containing ammonia and the inert gas is introduced into the first tanks 20A to 20C from the first introduction line 15. The ammonia contained in the introduced purge gas is absorbed by the absorption liquid L stored in the first tanks 20A to 20C. In this case, the absorption of ammonia to be performed by the absorption liquid L in the first tanks 20A to 20C is promoted by the first absorption promoting units 22A to 22C. In a case where the inert gas contained in the purge gas is difficult to be absorbed by the absorption liquid L in the first tanks 20A to 20C, the inert gas remaining without being absorbed by the absorption liquid L is accumulated in the gas phase in the first tanks 20A to 20C. As the purging progresses, a ratio (flow rate) of the inert gas in the purge gas introduced into the first tanks 20A to 20C is increased. The pressure of the gas phase in the first tanks 20A to 20C is increased by the inert gas that is sequentially introduced into the first tanks 20A to 20C in this way. The first tanks 20A to 20C and the second tanks 30A to 30C are connected to each other by the lower connection line 121. In a case where the liquid level regulating valve 122 is opened according to the pressure of the gas phase in the first tanks 20A to 20C, the liquid phase in the lower portions of the first tanks 20A to 20C is transferred to the lower portions of the second tanks 30A to 30C. Accordingly, the volume of the gas phase in the first tanks 20A to 20C is increased, and the pressure of the gas phase is reduced. Therefore, the purge gas flowing in thereafter can be further received by the first tanks 20A to 20C. As a result, the purge gas that flows in a large amount during the purging can be received by the first tanks 20A to 20C, so that a larger amount of ammonia can be caused to be absorbed. Further, even in a case where the inert gas is discharged from the first tanks 20A to 20C through the first gas discharge line 41, the pressure of the inert gas is reduced. Therefore, even in a case where a closed space is provided on the downstream side of the first gas discharge line 41, the occurrence of a phenomenon such as flooding in which water supplied into the closed space flows back upward due to the flow of the inert gas is suppressed.

Therefore, it is possible to ensure ammonia absorption capacity during the purging.

(11) A floating body 1 according to an eleventh aspect includes a floating main body 2 and the ammonia abatement systems 100A to 100E of any one of (1) to (10).

With such a configuration, it is possible to provide the floating body 1 including the ammonia abatement systems 100A to 100E that can ensure ammonia absorption capacity during purging.

(12) An ammonia abatement method S10 according to a twelfth aspect is an ammonia abatement method S10 of the ammonia abatement systems 100A to 100E of any one of (1) to (10). The ammonia abatement method S10 includes Step S11 of storing an absorption liquid L capable of absorbing ammonia in first tanks 20A to 20C, Step S12 of introducing purge gas containing ammonia and inert gas into the first tanks 20A to 20C, Step S13 of causing the absorption liquid L to absorb the ammonia contained in the purge gas introduced into the first tanks 20A to 20C, and Step S15 of transferring gas of a gas phase in upper portions in the first tanks 20A to 20C to the second tanks 30A to 30C in a case where a pressure of the gas phase in the first tanks 20A to 20C is equal to or higher than a preset reference pressure.

In the ammonia abatement method S10, the ammonia contained in the purge gas is absorbed by the absorption liquid L stored in the first tanks 20A to 20C in a case where the purge gas is introduced into the first tanks 20A to 20C. In a case where the pressure of the gas phase in the first tanks 20A to 20C is increased by the inert gas sequentially introduced into the first tanks 20A to 20C and is equal to or higher than the reference pressure, the gas of the gas phase in the upper portions of the first tanks 20A to 20C is transferred to the upper portions of the second tanks 30A to 30C, so that the pressure of the gas phase in the first tanks 20A to 20C is reduced. Therefore, the purge gas flowing in thereafter can be further received by the first tanks 20A to 20C. As a result, the purge gas that flows in a large amount during the purging can be received by the first tanks 20A to 20C, so that a larger amount of ammonia can be caused to be absorbed. Further, even in a case where the inert gas is discharged from the first tanks 20A to 20C through the first gas discharge line 41, the pressure of the inert gas is reduced. Therefore, even in a case where a closed space is provided on the downstream side of the first gas discharge line 41, the occurrence of a phenomenon such as flooding in which water supplied into the closed space flows back upward due to the flow of the inert gas is suppressed.

Therefore, it is possible to ensure ammonia absorption capacity during the purging.

### INDUSTRIAL APPLICABILITY

According to the ammonia abatement system, the floating body, and the ammonia abatement method of the embodiments of the present disclosure, it is possible to ensure ammonia absorption capacity during purging.

### REFERENCE SIGNS LIST

1 Floating body
2 Floating main body
2a Bow
4 Superstructure
5A, 5B Broadside
6 Bottom
7 Upper deck
8 Combustion device
9 Funnel
10 Purge gas introduction unit
11 Main introduction line
12 Tank introduction line
13 Bypass line
13V On-off valve
14 Main pipe
14V On-off valve
15 First introduction line
15V On-off valve
16 Second introduction line
16V On-off valve
20A to 20C First tank
21 Tank body
22A to 22C First absorption promoting unit
23 First circulation line
23a Portion
23j Portion
24 Spray
25 Circulation pump
26 Heat exchanger
27 Water intake pipe
28 Liquid level gauge
29 Pressure gauge
30A to 30C Second tank
31 Tank body
32A to 32C Second absorption promoting unit
33 Second circulation line
34 Spray
35 Circulation pump
36 Heat exchanger
37 Water intake pipe
38 Liquid level gauge
39 Pressure gauge
40 Exhaust unit
41 First gas discharge line
41V Flow regulating valve
42 Second gas discharge line
42V Flow regulating valve
43 Atmosphere release line
44 Dilution line
45 Dilution fan
50 Drainage unit
51 First liquid discharge line
52 Second liquid discharge line
52V On-off valve
53 Third liquid discharge line
53V On-off valve
55 Drain line
56, 57 Branch pipe
56V, 57V On-off valve
60 First wastewater tank
61 Drain line
62 Pump
68 Unloading line
70 Second wastewater tank
80 Ammonia component removal unit
81 Electrolysis unit
83 Denitrification unit
89 Discharge unit
100A to 100E Ammonia abatement system
110 Pressure regulating unit
111 Upper connection line
112 Pressure regulating valve
120 Liquid level regulating unit
121 Lower connection line
122 Liquid level regulating valve
128 Nozzle
129 Ejector
138 Nozzle
139 Ejector
FA Bow and stern direction
L Absorption liquid
S10, S20 Ammonia abatement method
S11, S21 Step of storing absorption liquid
S12, S22 Step of introducing purge gas
S13, S23 Step of causing ammonia to be absorbed
S14, S24 Step of checking pressure of gas phase
S15 Step of transferring gas of gas phase
S16, S26 Step of checking end of purging
S17, S27 Step of ending introduction of purging
S17A, S27A Step of bringing ammonia into gas-liquid equilibrium state
S18, S28 Step of discharging gas phase
S19, S29 Step of discharging liquid phase
S25 Step of transferring liquid of liquid phase

## Claims

1. An ammonia abatement system comprising:
a first tank that is configured to store an absorption liquid absorbing ammonia;
a first introduction line that is configured to introduce purge gas containing ammonia and inert gas into the first tank;
a first absorption promoting unit that is configured to promote absorption of ammonia to be performed by the absorption liquid in the first tank;
a first liquid discharge line that is configured to discharge liquid from a liquid phase in the first tank;
a first gas discharge line that is configured to discharge gas from a gas phase in the first tank;
a second tank that is provided independently of the first tank;
an upper connection line that is configured to connect the gas phase in an upper portion in the first tank and an upper portion in the second tank; and
a pressure regulating valve that is provided in the upper connection line and that is configured to be opened and closed according to a pressure of the gas phase in the first tank.

2. The ammonia abatement system according to Claim 1,
wherein, in a case where the pressure of the gas phase in the first tank is equal to or higher than a preset reference pressure, the pressure regulating valve is opened and causes the gas phase in the first tank to communicate with the upper portion of the second tank.

3. The ammonia abatement system according to Claim 1 or 2, further comprising:
a lower connection line that is configured to connect the liquid phase in a lower portion in the first tank and a lower portion in the second tank; and
a liquid level regulating valve that is provided in the lower connection line and that is configured to be opened and closed according to the pressure of the gas phase in the first tank.

4. The ammonia abatement system according to Claim 3,
wherein, in a case where the pressure of the gas phase in the first tank is equal to or higher than a preset reference pressure, the liquid level regulating valve is opened and causes the liquid phase in the first tank to communicate with the lower portion of the second tank.

5. The ammonia abatement system according to Claim 4,
wherein, in a case where the pressure of the gas phase in the first tank is lower than a preset lower limit pressure, the liquid level regulating valve is opened and returns liquid of a liquid phase in the second tank to the lower portion of the first tank.

6. The ammonia abatement system according to Claim 1 or 2,
wherein the second tank stores an absorption liquid absorbing ammonia, and
the ammonia abatement system further comprises:
a second introduction line that is configured to introduce purge gas containing ammonia and inert gas into the second tank; and
a second absorption promoting unit that is configured to promote absorption of ammonia to be performed by the absorption liquid in the second tank.

7. The ammonia abatement system according to Claim 1 or 2, further comprising:
a flow regulating valve that is configured to regulate a flow rate of the gas of the gas phase discharged from the first tank through the first gas discharge line.

8. The ammonia abatement system according to Claim 1 or 2,
wherein the first absorption promoting unit includes at least one of a spray that sprays the absorption liquid into the first tank, a nozzle that diffuses the purge gas into the absorption liquid in the first tank, or an ejector that causes the gas of the gas phase in the first tank to be sucked into a flow of the absorption liquid fed into the first tank.

9. The ammonia abatement system according to Claim 1 or 2, further comprising:
a first circulation line that is configured to circulate the liquid of the liquid phase in the first tank to the first absorption promoting unit.

10. An ammonia abatement system comprising:
a first tank that is configured to store an absorption liquid absorbing ammonia;
a first introduction line that is configured to introduce purge gas containing ammonia and inert gas into the first tank;
a first absorption promoting unit that is configured to promote absorption of ammonia to be performed by the absorption liquid in the first tank;
a first liquid discharge line that is configured to discharge liquid from a liquid phase in the first tank;
a first gas discharge line that is configured to discharge gas from a gas phase in the first tank;
a second tank that is provided independently of the first tank;
a lower connection line that is configured to connect the liquid phase in a lower portion in the first tank and a lower portion in the second tank; and
a liquid level regulating valve that is provided in the lower connection line and is configured to be opened and closed according to a pressure of the gas phase in the first tank.

11. A floating body comprising:
a floating main body; and
an ammonia abatement system according to Claim 1 or 2.

12. An ammonia abatement method of the ammonia abatement system according to Claim 1 or 2, the method comprising:
a step of storing an absorption liquid absorbing ammonia in a first tank;
a step of introducing purge gas containing ammonia and inert gas into the first tank;
a step of causing the absorption liquid to absorb the ammonia contained in the purge gas introduced into the first tank; and
a step of transferring gas of a gas phase in an upper portion in the first tank to the second tank in a case where a pressure of the gas phase in the first tank is equal to or higher than a preset reference pressure.
